(19) Europäisches Patentamt
European Patent Office
Office européen des brevets

(11) Publication number: **0 161 526**
**B1**

(12) **EUROPEAN PATENT SPECIFICATION**

(45) Date of publication of patent specification: **16.08.89**

(51) Int. Cl.$^4$: **C 08 F 2/32**

(21) Application number: **85104717.5**

(22) Date of filing: **18.04.85**

(54) **Process for the polymerization of shear-stable water-in-oil emulsions.**

(30) Priority: **19.04.84 US 602180**

(43) Date of publication of application:
**21.11.85 Bulletin 85/47**

(45) Publication of the grant of the patent:
**16.08.89 Bulletin 89/33**

(84) Designated Contracting States:
**DE FR GB**

(56) References cited:
**EP-A-0 119 078**
**GB-A-2 116 571**
**US-A-3 414 547**

(73) Proprietor: **UNION CARBIDE CORPORATION**
**39 Old Ridgebury Road**
**Danbury Connecticut 06817 (US)**

(72) Inventor: **Fan, You-Ling**
**3 Heritage Court**
**East Brunswick, NJ 08816 (US)**
Inventor: **Brode, George Lewis**
**653 Carlene Drive**
**Sommerville, NJ 08876 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 161 526 B1

## Description

### Background of the Invention

This invention relates to a process for producing a polymer water-in-oil emulsion; and more particularly and in a preferred embodiment, to a process for producing a water-in-oil emulsion of a linear, high molecular weight polymer.

Water-in-oil emulsion polymerization processes, in which a water-soluble monomer is emulsified in an oil phase and polymerized therein, are well known in the art. For example, U.S. Patent No. 3,284,393 describes such a process wherein water-soluble monomers are polymerized to high molecular weight polymers or copolymers utilizing a water-in-oil emulsion polymerization procedure. In the polymerization process described in said patent, one or a plurality of water-soluble monomers, or an aqueous solution thereof, are emulsified in an oil phase by means of a water-in-oil emulsifier and emulsion-polymerized under free radical forming conditions to form a polymeric latex in which the oil phase is the dispersion medium.

A water-in-oil emulsion of a polymer is produced by such a water-in-oil emulsion polymerization process, from which may be formed an aqueous solution of such polymer by inverting the emulsion with an inverting surfactant. Such "inverse emulsion polymerization" processes are an important part of the commercial production of certain types of water-soluble polymers where a liquid containing a high concentration of polymer is desired. For example, many anionic polymeric flocculants are high molecular weight, water-soluble polymers. The water-in-oil emulsion polymerization route to such polymers is the most significant, commercially-viable method that provides a liquid product containing a high loading (concentration) of such polymers. A liquid product is preferred in commercial flocculation for its ease in handling, transporting and rapid dissolution in water. Similar considerations hold for other types of high molecular weight, water-soluble polymers.

Due to a much higher dispersed phase/continuous phase ratio used in a water-in-oil emulsion than the more conventional oil-in-water emulsion and the requirement for good invertibility, the stability of a water-in-oil emulsion containing unreacted monomer is often only marginal. In fact, under the influence of a high shear field, in particular at elevated temperatures, a monomer emulsion can break down quite readily, resulting in phase separation. Polymerization of such an unstable monomer emulsion would inevitably lead to the formation of gels. Since the breaking down of a monomer emulsion by a shear field, which may result from a circulation pump, or a homogenizer, or in-line mixers, or a high speed of agitation, is more likely to occur at elevated temperatures, usually near or at the intended polymerization temperature, a stable monomer emulsion must be attained at this stage to prevent reactor fouling.

It has been noted that severe gelling problems (i.e., formation of coagulum) are encountered in attempting to form polymers in water-in-oil emulsions using a free-radical initiator. Since such polymerizations are highly exothermic, an external heat exchanger in a circulating loop used to cool the polymerization reaction often results in severe gellation of the entire mass. It was postulated that the high shear imparted to the emulsion, particularly at elevated temperature, during circulation in the external loop caused the breakdown of the emulsified droplets and their subsequent gellation.

This gellation problem was overcome by the novel use of two different kinds of initiators in the water-in-oil emulsion polymerization process. Specifically, it has been discovered that the shear stability of a monomer water-in-oil emulsion is drastically enhanced once a small amount of polymer is formed *in situ* in the monomer emulsion. In fact, such a monomer emulsion becomes shear-resistant even at elevated temperatures. A stable monomer water-in-oil emulsion can be achieved by initiating the polymerization during the heat-up process using a first, very reactive initiator and once a small amount of polymer is present therein, a stable water-in-oil emulsion results. The polymerization may then be completed by using a second, less reactive initiator at the desired reaction temperature. This process is described more fully in commonly-assigned, copending U.S. application Serial No. 474,420, filed March 11, 1983, the disclosure of which is hereby incorporated herein by reference.

### Summary of the Invention

The present invention, in its broadest aspects, is an improved process for preparing a water-in-oil emulsion of a polymer of a water-soluble monomer which comprises forming a water-in-oil emulsion of that monomer, forming a small amount of polymer of such monomer in that emulsion to make it shear-stable, and thereafter completing polymerization of said monomer to said polymer, only a single polymerization initiator being employed to form the emulsion and complete the polymerization. Due to the fact that the emulsion is rendered sheat-stable, any convenient polymerization procedure may then be employed without the danger of gel formation. For example, the emulsion may be polymerized and cooled by circulating at least part of the emulsion during polymerization through a circulating loop outside of the polymerization apparatus to remove the heat generated during the polymerization reaction. The present invention is particularly applicable to the preparation of water-in-oil emulsions of high molecular weight, linear, water-soluble polymers, although it is expected to be useful in the preparation of water-in-oil emulsions of any water-soluble polymer.

## Brief Description of the Drawings

Figures 1 and 2 are schematic illustrations of alternate embodiments of the process of the present invention.

Figure 3 illustrates the shear stability of a water-in-oil emulsion at different stages of polymerization.

## Description of the Preferred Embodiments

The improved process of the present invention for producing water-in-oil emulsions of a polymer from at least one ethylenically-unsaturated, water-soluble monomer includes the following steps:

(1) forming a water-in-oil emulsion of at least one water-soluble monomer;

(2) forming a small amount of water-soluble polymer of said monomer in said emulsion to provide a shear-stable water-in-oil emulsion; and

(3) thereafter completing polymerization of said monomer to form a water-in-oil emulsion of said water-soluble polymer.

Said process is characterized by the use of a single polymerization initiator for both the forming of the emulsion and the completion of the polymerization.

The process of the present invention offers a number of important advantages over water-in-oil emulsion polymerization processes taught in the prior art. Firstly, the problem of gellation during polymerization is substantially completely eliminated since the monomer water-in-oil emulsion is shear stable. Secondly, due to the shear stability of the monomer emulsion, a heat exchanger can be employed in an external circulating loop to remove the high heat of polymerization generated during the reaction, without the high shear of such a pumping operation causing undesirable gellation. Furthermore, the use of an external loop allows the polymerization to be run at a very fast rate while still ensuring the preparation of linear high molecular weight polymers having greatly decreased chain branching or cross-linking because of the good control of reaction temperature obtained thereby. The process of the present invention thus remedies significant disadvantages of prior art water-in-oil emulsion polymerization processes and provides an opportunity for the efficient, commercial production of linear, high molecular weight water-soluble polymers without the serious gellation problems of the prior art.

The process of the present invention is expected to be useful for the polymerization of any water-soluble monomer(s) which may be polymerized to water-soluble polymers by water-in-oil emulsion polymerization. For example, water-in-oil emulsion polymerization may be employed to homopolymerize and interpolymerize one or more of the following water-soluble monomers: acrylic and methacrylic acid; acrylic and methacrylic acid salts of the formula

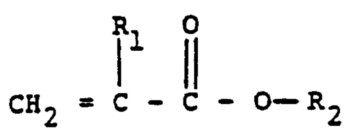

wherein $R_1$ is a hydrogen atom or a methyl group and $R_2$ is a hydrogen atom, an alkali metal atom (e.g., sodium, potassium), an ammonium group, an organoammonium group (I) of the formula $(R_3)(R_4)(R_5)\ NH^+$ (where $R_3$, $R_4$ and $R_5$ are independently selected from a hydrogen atom, an alkyl group having from 1 to 18 carbon atoms (it may be necessary to control the number and length of long-chain alkyl groups to assure that the monomer is water-soluble), such as 1 to 3 carbon atoms, an aryl group, such as a benzyl group, or a hydroxyalkyl group having from 1 to 3 carbon atoms, such as triethanolamine, or mixtures thereof); acrylamide and methacrylamide and derivatives thereof including acrylamido- and methacrylamido monomers of the formula:

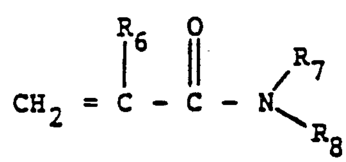

wherein $R_6$ is a hydrogen atom or a methyl group; wherein $R_7$ is a hydrogen atom, a methyl group or an ethyl group; wherein $R_8$ is a hydrogen atom, a methyl group, an ethyl group or $—R_9—SO_3X$, wherein $R_9$ is a divalent hydrocarbon group (e.g., alkylene, phenylene, cycloalkylene) having from 1 to 13 carbon atoms, preferably an alkylene group having from 2 to 8 carbon atoms, a cycloalkylene group having from 6 to 8 carbon atoms, or phenylene, most preferably

$-C(CH_3)_2-CH_2-$, $-CH_2CH_2-$, 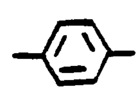 $-CH(CH_3)-CH_2-$,

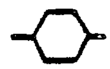 and 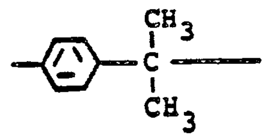,

X is a monovalent cation such as a hydrogen atom, an alkali metal atom (e.g., sodium, potassium), an ammonium group, an organoammonium group of the formula $(R_{37})$ $(R_{38})$ $(R_{39})$ $NH^+$ wherein $R_{37}$, $R_{38}$, $R_{39}$ are independently selected from a hydrogen atom, an alkyl group having from 1 to 18 carbon atoms (it may be necessary to control the number and length of long-chain alkyl groups to assure that the monomer is water-soluble) such as 1 to 3 carbon atoms, an aryl group such as a phenyl or benzyl group, or a hydroxyalkyl group having from 1 to 3 carbon atoms such as triethanolamine, or mixtures thereof, etc.; vinyl sulfonates such as sodium vinyl sulfonate; olefinic dicarboxylic acids such as maleic acid; and the like.

Specific examples of water-soluble monomers which may be homopolymerized or interpolymerized by the process of the present invention are acrylic and methacrylic acid; salts thereof such as sodium acrylate and ammonium acrylate; acrylamide and methacrylamide; aminoalkyl- and dialkylaminoalkyl-acrylates and -methacrylates such as dimethylaminoethyl methacrylate; acrylamido- and methacrylamido-sulfonic acids and sulfonates such as 2-acrylamido-2-methylpropanesulfonic acid (available from the Lubrizol Corporation under its tradename, and hereinafter referred to as, "AMPS"®), sodium "AMPS"®, ammonium "AMPS"®, organoammonium "AMPS"®.

These water-soluble monomers may be interpolymerized with a minor amount (i.e., less than about 20 mole%, preferably less than about 10 mole%, based on the total monomers fed to the reaction) of one or more hydrophobic vinyl monomers to impart certain desirable properties to the resulting polymer; i.e. vinyl monomers of the formula

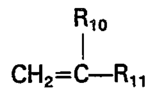 II

wherein $R_{10}$ is a hydrogen atom or a methyl group and $R_{11}$ is

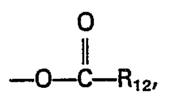

a halogen atom (e.g., chlorine), $—O—R_{13}$,

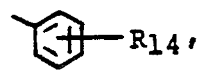 or 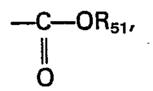

wherein $R_{51}$ is an alkyl group, an aryl group or an aralkyl group having from 1 to 18 carbon atoms, wherein $R_{12}$ is an alkyl group having from 1 to 8 carbon atoms, $R_{13}$ is an alkyl group having from 1 to 6 carbon atoms, preferably 2—4 carbon atoms, $R_{14}$ is a hydrogen atom, a methyl group, an ethyl group, or a halogen atom (e.g., chlorine), preferably a hydrogen atom or a methyl group, with the proviso that $R_{10}$ is preferably a hydrogen atom when $R_{12}$ is an alkyl group. Specific examples of suitable copolymerizable hydrophobic vinyl monomers are alkyl esters of acrylic and methacrylic acids such as methyl acrylate, methyl methacrylate, ethyl acrylate, ethyl methacrylate, butyl acrylate, isobutyl acrylate, dodecyl acrylate, 2-ethylhexyl acrylate, etc.; vinyl esters such as vinyl acetate, vinyl propionate, vinyl butyrate, etc.; vinylbenzenes such as styrene, alpha-methyl styrene, vinyl toluene; vinyl ethers such as propyl vinyl ether, butyl vinyl ether, isobutyl vinyl ether, methyl vinyl ether, ethyl vinyl ether, etc.; vinyl halides such as vinyl chloride, vinylidene chloride, etc.; and the like.

If any substituent in any of the formulas disclosed in this application is an alkyl group, it may be methyl, ethyl, propyl, butyl, pentyl, hexyl, heptyl, nonyl, decyl, undecyl, dodecyl, tridecyl, tetradecyl, pentadecyl, hexadecyl, heptadecyl and octadecyl as straight or branched chain, depending on the number of carbon atoms mentioned in each case.

The preferred water-soluble monomers are acrylamide, "AMPS"® and sodium "AMPS"®, sodium acrylate, and ammonium acrylate. The preferred hydrophobic monomers are vinyl acetate, ethyl acrylate, styrene and methyl methacrylate.

As stated above, the process of this invention may be used to prepare homopolymers or interpolymers of monomers which may be polymerized by water-in-oil emulsion polymerization, such as the monomers exemplified above. By "interpolymers" is meant copolymers of two of such monomers, terpolymers of three of such monomers, tetrapolymers of four of such monomers, and higher polymers if desired. The number of different monomers employed in the polymerization process is not critical and may be varied

depending upon the particular polymer desired. The process of the present invention is especially useful for the preparation of anionic, linear, high molecular weight polymers useful as flocculants in treating, for example, waste mineral processing streams, and therefore the process of the invention will be described in detail below mostly with respect to such polymers merely as a matter of convenience. It is to be expressly understood however that the process of the present invention is not limited to preparing only such types of polymers; rather, it is the intention that any water-soluble monomer capable of polymerization by water-in-oil emulsion polymerization to a water-soluble polymer may be polymerized by the process of this invention.

Moreover, the process of the present invention is particularly useful in combination with an external circulating loop for cooling the water-in-oil emulsion during polymerization. Therefore, the present invention will be described in detail below mostly with respect to these particular embodiments as a matter of convenience. Nevertheless, it is to be expressly understood that the present invention should not be limited thereby.

As will be described below in more detail, the formation of the small amount of polymer necessary to obtain a shear-stable emulsion, as well as the subsequent completion of the polymerization of that monomer, is achieved using only a single initiator. Conventional cooling means such as internal cooling coils, jacketed reactor vessels, etc., may be conveniently used to cool the shear-stable emulsion during completion of the polymerization.

Broadly, the process of the present invention includes the step of forming a water-in-oil emulsion of at least one monomer (normally, a water-soluble monomer) from the combination of (1) an aqueous phase comprising an aqueous solution containing at least one such monomer and (2) an oil phase comprising a mixture of a hydrophobic liquid and an oil-soluble surfactant. If it is desired to include a hydrophobic monomer into the polymer being polymerized, one or more hydrophobic monomers may be incorporated into the oil phase, i.e. the mixture of the hydrophobic liquid and oil-soluble surfactant. The combined aqueous and oil phases may be homogenized or emulsified to form a water-in-oil emulsion containing the water-soluble monomer(s), the hydrophobic liquid, any hydrophobic monomer(s), water and the oil-soluble surfactant. The resulting monomer water-in-oil emulsion is preferably deoxygenated and thereafter the monomers are polymerized.

The polymerization reaction normally generates considerable heat which must be removed. For example, when one of the water-soluble monomers being polymerized is acrylamide, due to the very fast rate of its polymerization (about $8 \times 10^{-3}$ moles/liter.sec. at 50°C) and its high heat of polymerization (about −83.7 kJ/mol (−20 kcal/mole)), an enormous amount of heat is generated during the polymerization reaction which must be dissipated properly to avoid the occurrence of a runaway exotherm and the formation of gels. An effective and the preferred method for heat removal is the use of an external heat exchanger connected to the reactor through a closed circulating loop. The reaction mixture may be circulated through the heat exchanger by a pump during the course of the polymerization. Any conventional apparatus may be used to provide the external heat exchange loop. Alternatively, any other convenient means (e.g., internal cooling coils, a jacketed reaction vessel, etc.) may be used to cool the emulsion being polymerized.

The most significant advantage is that the emulsion, during polymerization, may be cooled and the polymerization controlled by the use of any convenient cooling means due to the fact that the emulsion has been rendered shear-stable by the formation of a small amount of polymer therein at the very start of the polymerization.

The means of obtaining a shear-stable emulsion comprises the use of only a single polymerization initiator, which may be either a low temperature or a high temperature initiator. For example, a sufficient amount of an appropriate initiator can be incorporated into the monomer water-in-oil emulsion and a small amount of polymer formed therein at a low temperature to convert the emulsion into a shear-stable emulsion. Thereafter, the polymerization may be completed using the same initiator.

In the case of a low temperature initiator, only a small amount is required to initiate the polymerization and form the small amount of polymer necessary to convert the emulsion into a shear-stable one. However, a larger amount would be required to complete the polymerization. In the case of a higher temperature initiator, a relatively larger amount would be required to initiate polymerization at the lower temperature and form the shear-stable emulsion, although that amount would be sufficient in most cases to subsequently permit completion of the polymerization. The amount of initiator required will depend upon the monomers being polymerized, the temperature of the initial polymerization and the particular initiator employed.

The process of the invention can be performed in a single vessel or in more than one vessel. Its operation may be conducted batchwise or in a continuous fashion. For example, the formation of the shear-stable emulsion may be conducted in a first reactor and the polymerization subsequently completed in a different vessel. Either or both vessels may be provided with convenient cooling means, such as discussed above. The particular arrangement of apparatus is not critical. The important factors determining selection of appropriate equipment are that a sufficient amount of polymer be formed at a low temperature during the initial polymerization in order to provide shear-stability to the monomer emulsion, and that polymer conversion and shear-stability be obtained without excessive shear (i.e., sufficient to break down the emulsion and prevent obtaining shear-stability) and before reaching the higher temperature necessary or

desirable for completion of the polymerization reaction. One additional factor must be considered. The small amount of polymer that is formed during the initial polymerization, resulting in a shear-stable emulsion, must be of a reasonably high molecular weight. If the molecular weight of that small amount of polymer is not reasonably high, it is possible that the small amount produced during the initial stages will be insufficient to provide the requisite shear-stability. The particular minimum level of molecular weight will, of course, vary depending upon the particular emulsion being polymerized. However, with most vinyl-type monomers, relatively high molecular weight polymer is formed almost immediately upon initiation of the polymerization reaction; therefore, when polymerizing such monomers by the process of the present invention, it is expected that the small amount of polymer formed at the beginning of the polymerization will have a sufficiently high molecular weight to provide shear-stability to the emulsion.

Figure 1 of the drawings schematically illustrates the process of the present invention, including the preferred circulating loop cooling embodiment. With reference to Figure 1, a monomer water-in-oil emulsion is fed via line *11* to a reactor *10* which is preferably provided with suitable agitation means (not shown). Prior to initiating any polymerization, the emulsion is preferably deaerated such as by sparging a gas such as nitrogen through the emulsion in the reactor via line *13*. Alternatively, the emulsion may be deaerated prior to being fed to reactor *10*. The same line *13* may be used during the actual polymerization to sparge air or oxygen through the emulsion in order to control the rate of polymerization, as discussed in more detail below.

Once the emulsion has been deaerated, one or more suitable polymerization initiators may be fed to the reactor via line *12*. The emulsion is then agitated and heated by any suitable means (not shown) to initiate the polymerization. Simultaneously, or shortly thereafter, the emulsion may be pumped through a circulating loop in order to cool same during the polymerization reaction. Specifically, the emulsion is withdrawn via line *14* and a pump *15* is used to feed the emulsion through a heat exchanger *17* and back to the reactor via lines *16* and *20*, respectively. A suitable coolant is fed to the heat exchanger via lines *18* and *19* to provide the necessary heat transfer. At the conclusion of polymerization, product emulsion may be withdrawn via line *21*.

A sufficient amount of initiation must be present to initiate the polymerization and form a shear-stable emulsion. Depending upon the initiator utilized, a sufficient amount of initiator to complete the polymerization may be added at the outset or may be added incrementally throughout the course of the polymerization reaction.

Once a small amount of polymer is formed, and a shear-stable emulsion obtained, the emulsion may be heated to the higher temperature and pumped through the circulating loop without fear of undesirable gel formation occurring.

The emulsion fed to the reactor may be formed using conventional techniques. The preferred method is to add the pre-mixed aqueous phase to the oil phase with suitable agitation to form the emulsion. Alternatively, the oil phase, preferably pre-mixed, may be added to the aqueous phase without agitating during the addition. Subsequently, in this particular embodiment, agitation is commenced to form a water-in-oil emulsion. A third alternative is to continuously, in-line blend pre-mixed oil and aqueous phases to directly form a water-in-oil emulsion. In the case of the preferred mode, the addition of the aqueous phase to the oil phase, an additional vessel may be required to pre-mix the aqueous phase prior to that addition. That additional vessel may not be required in the second mode since components of the oil phase may be added directly to the quiescent aqueous phase (e.g., the hydrophobic monomer(s) may be added separately from a mixture of an oil-soluble surfactant and the necessary hydrophobic liquid).

In any event, regardless of the particular technique employed to prepare the monomer water-in-oil emulsion, care should be taken to prevent accidental polymerization thereof, such as maintaining the aqueous phase and the emulsion at a low temperature (e.g., less than about 25°C) or by sparging air through the aqueous phase or the completed emulsion. In the latter instance, it will be necessary to deaerate the emulsion prior to initiation of the polymerization. Moreover, the polymerization initiator(s) should not be added until after the water-in-oil emulsion is formed in order to prevent premature polymerization of the monomers.

An alternate manner of practicing the present invention is the semi-continuous process shown schematically in Figure 2. According to that process, a monomer water-in-oil emulsion (preferably kept at a temperature below 25°C and deaerated) is continuously fed via line *24* to a first, small reactor *22* along with a suitable initiator via line *23*. The amount of initiator, the temperature and amount of residence time are controlled in reactor *22* to provide a shear-stable emulsion containing only a small amount of *in situ*-formed polymer, which is then continuously fed via line *25* to a second, larger batch reactor *27*. Once a sufficient amount of emulsion is in reactor *27*, the polymerization may be completed therein. The amount of initiator initially provided to the process must be sufficient to allow completion of the polymerization or additional initiator may be introduced into the large batch reactor *27*. The emulsion is cooled during polymerization by withdrawing a portion of the emulsion from reactor *27* through line *28* and pumping it (using pump *29*) through a heat exchanger *31* and back to the reactor through lines *30* and *32*, respectively. A suitable coolant may be provided to the heat exchanger via lines *33* and *34*. Product may be obtained through line *35*.

Regardless of the particular arrangement of apparatus employed, the polymerization may be initiated by adding to the emulsion an initiator capable of polymerizing the monomers at low temperature, and

heating the resulting emulsion/initiator combination to a low temperature sufficient to initiate polymerization of the monomers.

Once a small amount of polymer is formed therein, and a shear-stable emulsion formed, the polymerization may then be continued at a higher temperature and completed to form a water-in-oil emulsion of the resulting polymer. The polymer water-in-oil emulsion may be recovered and the polymer itself may be recovered should that be desirable. Alternatively, an inverting surfactant may be added to the polymer water-in-oil emulsion to invert the emulsion on contact with water.

To obtain the aqueous phase used to prepare the monomer emulsion, an aqueous solution containing at least one water-soluble monomer is prepared. It is preferred that the monomers, as well as the other raw materials, be of high purity so as to produce high molecular weight polymers. The number of monomers contained in the aqueous solution is not critical and any combination of any water-soluble monomer having a water-solubility of at least about 50 weight percent may be employed. The aqueous solution may be prepared by conventional techniques and may contain the monomers in any concentration, for example, from about 10 to about 75 weight percent, based upon the weight of the aqueous solution. If the water-soluble monomers include acids, for example, acrylic acid or "AMPS"®, it may be convenient to first react the acid with a suitable base, preferably with an equivalent amount of base, such as sodium hydroxide, to provide, e.g., a sodium salt solution having a pH from about 5 to about 11, preferably from about 6 to about 10, depending upon the type and amount of base employed. The preferred base is sodium hydroxide. Any additional water-soluble monomers may then be added to the resulting salt solution to provide the aqueous solution to be combined with the hydrophobic liquid-containing mixture.

It is preferred to also add a chelating agent to the aqueous phase in order to complex any metal ions present therein, which if present could act as chain transfer agents and inhibit or prevent formation of high molecular weight polymers. For example, aqueous acrylamide may contain sufficient amounts of cupric ions to inhibit formation of high molecular weight polymer. A chelating agent such as the pentasodium salt of diethylene triamine pentaacetic acid (available from Dow Chemical Corporation under its trademark VERSENEX 80®) should preferably be employed to complex such metal ions before polymerization is commenced. The particular chelating agent is not critical and will vary depending on the monomer(s) being polymerized.

The oil phase, to be combined with the foregoing aqueous phase, generally comprises a mixture of a hydrophobic liquid and an oil-soluble surfactant and, optionally, one or more hydrophobic monomers.

The particular hydrophobic liquid is not critical. Examples of suitable hydrophobic liquids for use herein include benzene, xylene, toluene, mineral oils, kerosenes, petroleum, and mixtures thereof. A preferred hydrophobic liquid is an aliphatic hydrocarbon available from the Exxon Chemical Co. under its tradename Isopar M®.

The hydrophobic monomer(s) which may be added to the oil phase may be any hydrophobic monomer which has a solubility in water of less than about 10 weight percent and includes, for example, one or more of vinyl esters such as vinyl acetate, vinyl propionate, vinyl butyrate, etc.; alkyl acrylates such as ethyl acrylate, butyl acrylate, isobutyl acrylate, dodecyl acrylate, 2-ethylhexyl acrylate, etc.; alkyl methacrylates such as methyl methacrylate; vinyl ethers such as methyl vinyl ether, ethyl vinyl ether, butyl vinyl ether, propyl vinyl ether, isobutyl vinyl ether, etc.; acrylonitrile; styrene and its derivatives, such as alphamethylstyrene; vinyl halides such as vinyl chloride, vinylidene chloride, etc.; N-vinyl carbazole; and the like.

Oil-soluble surfactants suitable for producing water-in-oil emulsions may be employed in the present invention. Examples of suitable oil-soluble surfactants for use in the oil phase are those of the oil-soluble type having a Hydrophile-Lipophile Balance (HLB) value of from about 1 to about 10, preferably from about 2 to about 6. These surfactants may be referred to as the water-in-oil type. The suitable surfactants include fatty acid esters, such as sorbitan monolaurate, sorbitan monostearate, sorbitan monooleate (such as that available from I.C.I. under its tradename SPAN 80®, a preferred surfactant), sorbitan trioleate, etc.; mono- and diglycerides, such as mono- and diglycerides obtained from the glycerolysis of edible fats; polyoxyethylenated fatty acid esters, such as polyoxyethylenated (4) sorbitan monostearate; polyoxyethylenated linear alcohols (such as Tergitol 15—S—3® and Tergitol 25—L—3® available from Union Carbide Corp.); polyoxyethylene sorbitol esters, such as polyoxyethylene sorbitol beeswax derivative; polyoxyethylenated alcohols such as polyoxyethylenated (2) cetyl ether, and the like.

The oil phase may contain any convenient amount of hydrophobic monomer, depending upon the particular monomer and the desired content of such monomers in the final polymer product. Similarly, the amount of oil-soluble surfactant in the oil phase is generally at least that amount sufficient to form the resulting monomer water-in-oil emulsion when the oil phase is blended with the foregoing aqueous phase. However, generally speaking, the oil phase contains from about 1 to about 10 weight percent of the surfactant, based on the total weight of the oil phase. The amount of hydrophobic liquid in the oil phase is generally on the order of from about 70 to about 99 weight percent, based on the total weight of the oil phase.

The oil phase is then blended or combined with the foregoing aqueous phase and the resulting mixture may be homogenized or emulsified to form a water-in-oil emulsion containing the monomer(s) to be polymerized. Emulsification takes place by subjecting the mixture to high shear mixing techniques and using equipment which are generally well-known in the art. These include the use of homogenizers, high

speed mixers and any other techniques for obtaining high shear mixing. The emulsification generally is carried out at a temperature of from about 10 to about 30°C, preferably below about 25°C. The emulsification may be carried out either continuously or in a batch process. It is preferred to add the water phase to the agitated oil phase to form the water-in-oil emulsion. This approach would require an additional vessel (for preparation of the aqueous phase) beyond what is shown in Figure 1. Alternatively, the oil phase may be added to the unagitated aqueous phase, followed by agitation to form the water-in-oil emulsion.

The water-in-oil emulsions so prepared normally have a rather narrow particle size distribution. The diameters of the majority of the particles may range from about 0.2 to about 5 µm (microns), preferably from about 1 to about 2 µm (microns).

The resulting monomer water-in-oil emulsion comprises:

(a) an aqueous phase constituting from about 50 to about 80, preferably from about 60 to about 78, weight percent of the total emulsion and containing the water-soluble monomer(s) wherein the monomers constitute from about 20 to about 80, preferably from about 25 to about 50, weight percent of the total aqueous phase;

(b) an oil phase constituting from about 15 to about 45, preferably from about 20 to about 40, weight percent of the total emulsion and containing a hydrophobic liquid and, optionally, from about 0.1 to about 20, preferably from about 1 to about 10, weight percent, based on the weight of the oil phase, of one or more hydrophobic monomers; and

(c) an oil-soluble surfactant constituting from about 0.1 to about 5, preferably from about 1 to about 3, weight percent of the total emulsion.

It is preferred to maintain the monomer emulsion (as well as the aqueous phase prior to emulsification) at a sufficiently low temperature (e.g., below about 25°C) so as to avoid accidental polymerization. Other means, such as sparging air therethrough, may also be employed.

After forming the monomer water-in-oil emulsion, either during or after addition to a reactor, it is generally deoxygenated, preferably by sparging with nitrogen; alternatively, part or all of the emulsion may be subjected to a vacuum of from about 6.7 (50) to about 66.5 (500), preferably from about 13.3 (100) to about 26.6 kPa (200 mm of mercury) under an inert gas atmosphere at a temperature of from about 0 to about 30°C, either continuously or as a batch process.

The emulsion may then be polymerized.

The initiator may be added to the reactor as it is but is preferably added in the form of a solution, i.e., the initiator is dissolved in a suitable solvent, such as a hydrocarbon liquid, e.g., xylene or toluene. The initiator solution typically contains the initiator in an amount of from about 0.1 to about 10, preferably from about 0.5 to about 5, weight percent.

The polymerization is then initiated by heating to a temperature of from about 30 to about 60°C, preferably from about 40 to about 50°C until a small amount of polymer is formed therein and a shear-stable emulsion is obtained. The specific amount of polymer formed is not critical, as long as a shear-stable emulsion is obtained, and will depend upon the specific initiator employed, the reactivity of the monomers being polymerized, the temperature of polymerization, the time during which the monomer water-in-oil emulsion is subjected to heating in the presence of the initiator, etc. Generally speaking, it is desirable and it is therefore preferred that this initial polymerization be conducted at a temperature and for a period of time necessary to obtain a shear-stable emulsion, and without subjecting the emulsion to higher polymerization temperatures prior to obtaining that shear-stability, so that the polymerization can be completed at higher temperatures. The amount of polymer necessary to obtain a shear-stable emulsion will necessarily depend upon the monomers being polymerized, the molecular weight of the resulting polymer, the temperature of polymerization, the amount of shear which the emulsion experiences during polymerization, etc. Those skilled in the art should be capable of determining the necessary amount of polymer to be formed for a given system to provide a shear-stable emulsion. As a general guideline to assist those skilled in the art to more easily practice the present invention, for a monomer water-in-oil emulsion system which contains 50 to 60 mole percent acrylamide monomer, 1 to 10 mole percent vinyl acetate monomer and 30 to 49 mole percent sodium acrylate monomer, all based upon the total monomers, this initial polymerization is conducted under necessary conditions to obtain from about 1 to about 5 percent, based on the total emulsion, of polymer therein. This level of polymer for this particular combination of monomers produces a shear-stable emulsion. The amount of polymer may be determined using suitable conventional techniques, such as a coagulation test.

The initial polymerization is generally and preferably performed at atmospheric pressure, although sub-atmospheric or super-atmospheric pressures may be used. In addition, the initial polymerization is also preferably carried out under an inert atmosphere, such as a helium, argon or nitrogen atmosphere.

The polymerization reaction rate may be controlled by the introduction of small quantities of air (atmospheric air and/or oxygen) into the reaction. The duration and amount of air injection may vary, and it may be repeated as many times as necessary until a desired rate of polymerization is achieved. It is preferred to operate the external heat exchanger in the circulating loop at or near its full cooling capacity while maintaining the desired reaction temperature by the intermittent introduction of air as required.

After the polymerization is complete, an antioxidant may be added to the reaction mass. Any organic antioxidant suitable for the inhibition of free radical reactions may be used. The antioxidant is generally

first dissolved in a suitable solvent. The preferred antioxidants include substituted phenols such as 2,6-di-t-butyl-4-methyl phenol (known as "BHT"), thiobisphenol (such as that available from Monsanto under its tradename Santonox-R®), and hydroquinone derivatives, such as the monomethyl ether of hydroquinone. The suitable solvents include toluene, benzene, xylene, diethyl ether, methyl acetate, and the like. The antioxidant may be present in the antioxidant solution in amounts of from about 0.1 to about 10, preferably from about 1 to about 5 weight percent.

The antioxidant solution is added to the reaction mass in amounts of from about 0.05 to about 5 parts per hundred parts of polymer. Addition of the antioxidant may be commenced either at the end of the polymerization or after the reaction mixture has been cooled to ambient temperature.

The reaction mass is generally cooled to about 25°C and the polymer water-in-oil emulsion recovered. Unreacted monomer(s) may first be removed from the emulsion if desired or necessary; such as by stripping with the use of an increased nitrogen flow.

The resulting polymer water-in-oil emulsion generally comprises:

(a) an aqueous phase comprising from about 50 to about 80, preferably from about 60 to about 78, weight percent of the total emulsion and containing therein from about 20 to about 80, preferably from about 25 to about 60, weight percent of polymer, based on the total weight of aqueous phase;

(b) a hydrophobic liquid constituting from about 15 to about 50, preferably from about 20 to about 40, weight percent of the total emulsion, and

(c) an oil-soluble surfactant constituting from about 0.1 to about 5, preferably from about 1 to about 3, weight percent of the total emulsion.

After the polymer water-in-oil emulsion is prepared, a water-soluble inverting surfactant may be added thereto. The surfactants which may be used include polyoxyethylene alkyl phenol; polyoxyethylene (10 mole) cetyl ether; polyoxyethylene alkyl-aryl ether; quaternary ammonium derivatives; potassium oleate; N-cetyl-N-ethyl morpholinium ethosulfate; sodium lauryl sulfate; condensation products of higher fatty alcohols with ethylene oxide, such as the reaction product of oleyl alcohol with 10 ethylene oxide units; condensation products of alkylphenols and ethylene oxide, such as the reaction products of isooctylphenol with 12 ethylene oxide units; condensation products of higher fatty acid amines with five, or more, ethylene oxide units; ethylene oxide condensation products of polyhydric alcohol partial higher fatty esters, and their inner anhydrides (e.g., mannitol anhydride, called Mannitan, and sorbitol-anhydride, called Sorbitan). The preferred surfactants are ethoxylated nonyl phenols (e.g., available from Union Carbide Corporation under its trademark TERGITOL NP—10®), ethoxylated nonyl phenol formaldehyde resins, and the like.

The inverting surfactant may be used in amounts of from about 0.1 to about 20, preferably from about 1 to about 10, parts by weight per one hundred parts by weight of the polymer.

The water-in-oil emulsion containing the inverting surfactant is inverted in the presence of water releasing the polymer into the water in a very short period of time.

The solubilized polymer may then be used, for example, as a flocculant in treating mineral processing streams such as phosphate slimes or coal blackwater suspensions. For use as a flocculant, the water solution may contain from about 0.001 to about 0.3, preferably from about 0.01 to about 0.1, weight percent polymer.

The present invention may be employed to prepare many kinds of anionic, cationic or amphoteric polymers, for example, polymers similar or identical to those described in EP—A—74660. Those polymers are preferably of the following general formula:

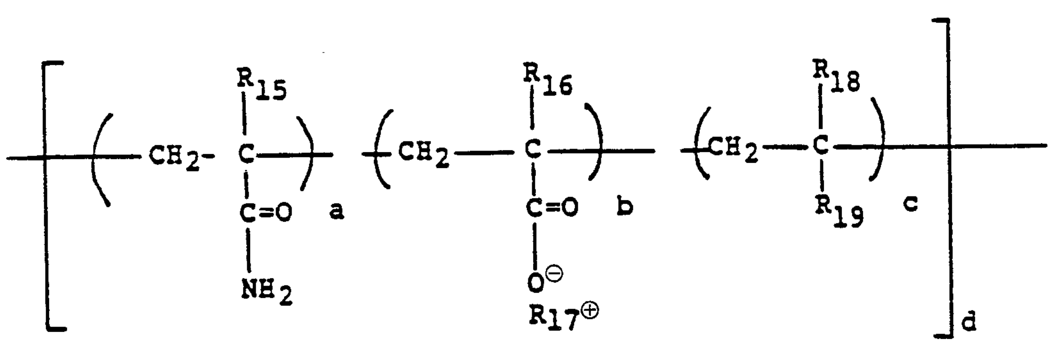

wherein $R_{15}$, $R_{16}$ and $R_{18}$ are independently hydrogen or methyl; $R_{17}^{+}$ is an alkali metal ion, such as $Na^{+}$ or $K^{+}$, or an ammonium group; $R_{19}$ is $-OR_{20}$ (where $R_{20}$ is an alkyl group having up to 5 carbon atoms),

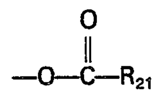

(where $R_{21}$ is either methyl or ethyl),

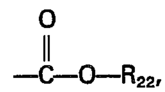

(where $R_{22}$ is an alkyl group having up to 8 carbon atoms), phenyl, methyl-substituted phenyl, CN, or

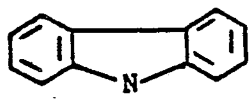 ;

wherein a is from about 5 to about 90 mole percent, preferably from about 30 to about 60 mole percent, b is from about 5 to about 90, preferably from about 30 to about 60 mole percent, c is from 0 to about 20 mole percent, preferably from about 1 to about 10 mole percent, with the proviso that a + b + c equals 100 mole percent, and d is an integer of from about 1,000 to about 500,000. Under certain conditions, the alkoxy or acyloxy groups in the polymer may be partially hydrolyzed to the corresponding alcohol group and yield a polymer of the following general formula:

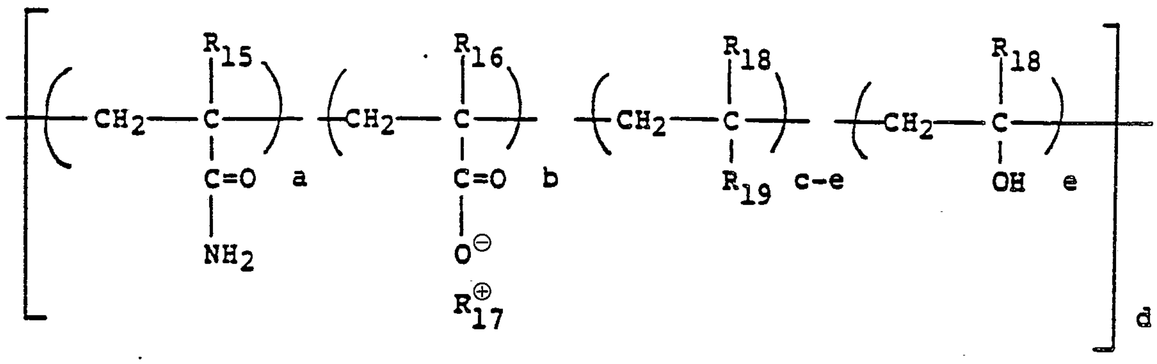

wherein $R_{15}$, $R_{16}$, $R_{17}^{+}$, $R_{18}$, $R_{19}$, a, b, c and d are as previously defined and e is from 0 to less than about 20 mole percent and wherein a + b + (c − e) + e = 100 mole %.

Among the most preferred polymers which may be prepared by the process of the present invention are terpolymers of the following formula:

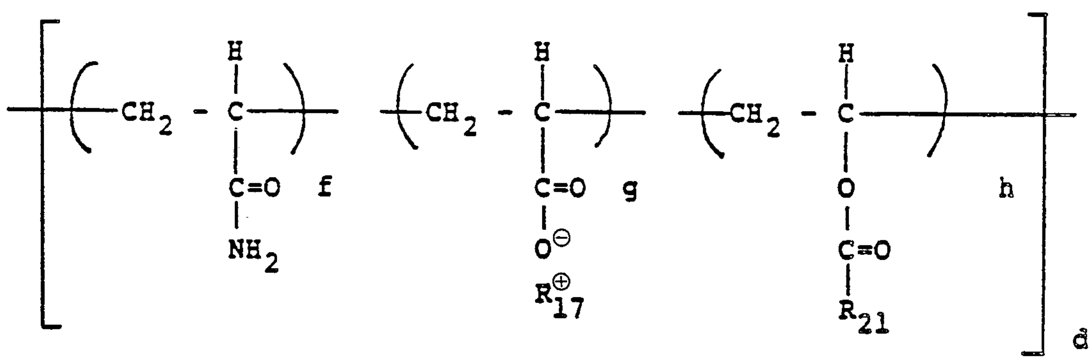

wherein $R_{17}^{+}$ is $Na^{+}$ or $K^{+}$ or $NH_4^{+}$, $R_{21}$ is methyl, ethyl or butyl, and f is from about 5 to about 90, preferably from about 30 to about 60 mole percent, g is from about 5 to 90, preferably from about 30 to 60 mole percent, h is from 0 to about 20 mole percent, with the proviso that f + g + h equals 100 mole percent and d is as previously defined.

Among the preferred polymers which may be prepared by the process of the present invention are polymers of the following formula:

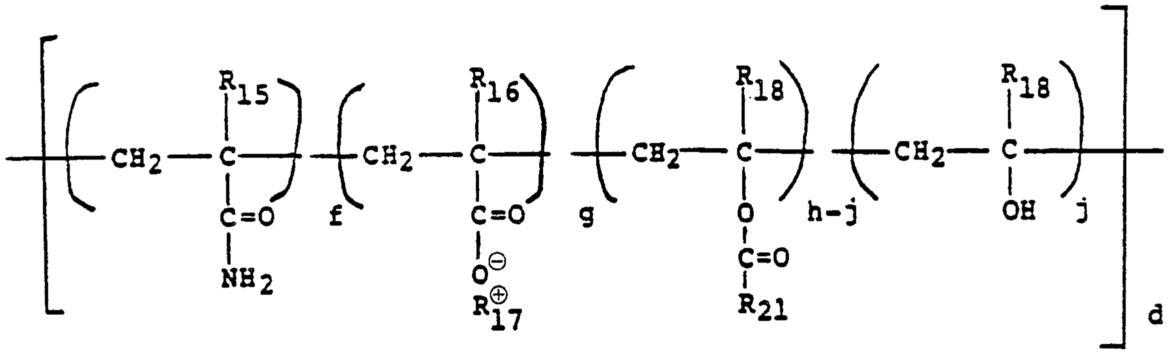

wherein $R_{15}$, $R_{16}$, $R^{+}_{17}$, $R_{18}$, $R_{21}$, f, g, h, d and e are as previously defined.

For purposes of the present invention, another type of preferred polymers are similar or identical to those disclosed in GB—A—2 136 440. Those polymers are preferably of the following general formula:

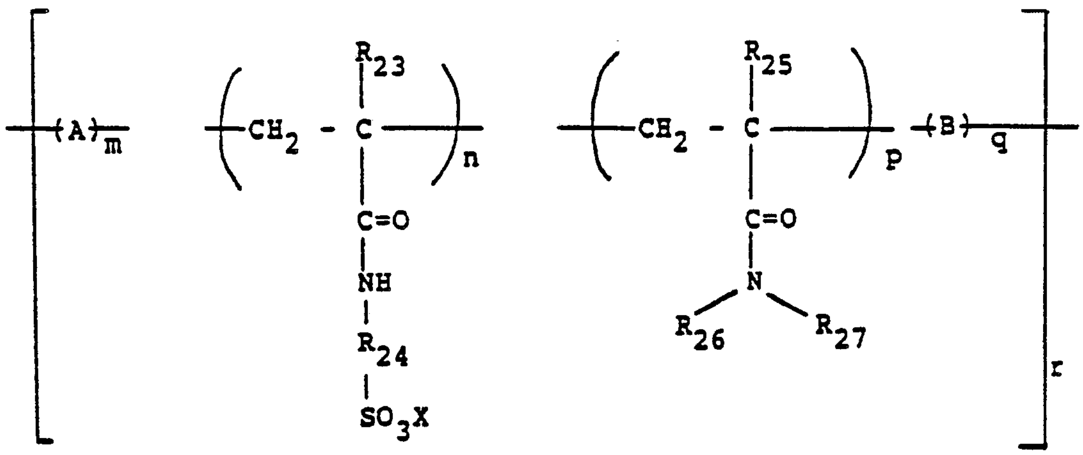

wherein A represents a repeating unit derived from a hydrophobic vinyl monomer having a water-solubility of less than about 5 weight % (see e.g. Formula II); $R_{23}$ and $R_{25}$ are each independently a hydrogen atom or a methyl group; $R_{26}$ and $R_{27}$ are each independently a hydrogen atom, a methyl group or an ethyl group; $R_{24}$ represents a divalent hydrocarbon group having from 2 to 13 carbon atoms; X represents a monovalent cation; B represents a repeating unit derived from an ethylenically-unsaturated carboxylic acid or a salt thereof; m is from 0 to about 10 mole %, n is from about 1 to about 40 mole %, p is from about 20 to about 98.9 mole %, and q is from 0 to about 40 mole %, with the proviso that m + n + p + q = 100 mole %; and r is a large positive integer (e.g., such that the polymer molecular weight is greater than 500,000, preferably greater than 1,000,000).

Among the preferred polymers which may be prepared by the process of the present invention are terpolymers represented by the following formula:

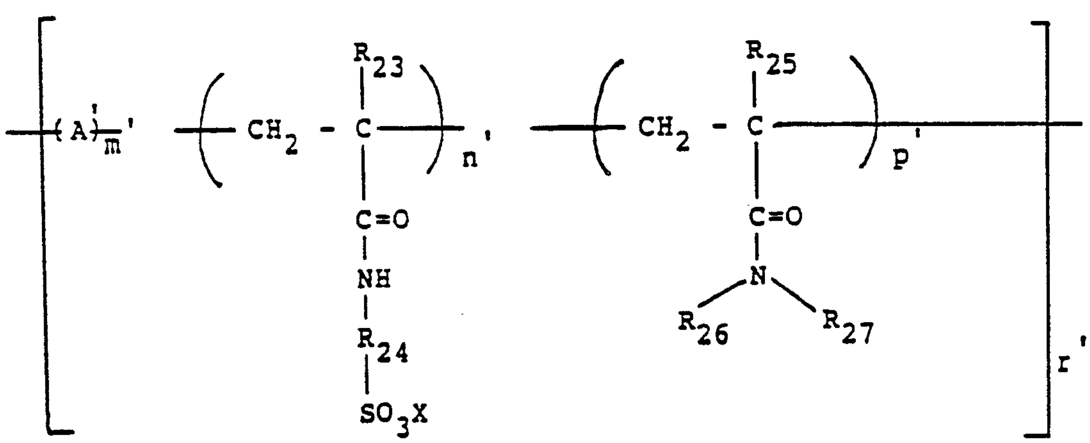

wherein

(1) A′ represents a repeating unit derived from a hydrophobic vinyl monomer having a water-solubility

of less than about 5 weight percent such as monomeric repeating units represented by the formula

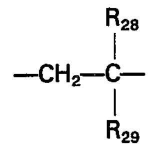

wherein $R_{28}$ is —H or —$CH_3$; $R_{29}$ is

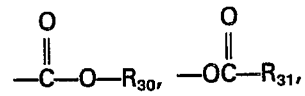

a halogen atom (e.g., chlorine), —O—$R_{32}$, —CN or

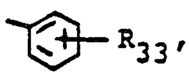

wherein $R_{30}$ is an alkyl group having from 1 to 12 carbon atoms, preferably from 1 to 4 carbon atoms, most preferably a butyl group, $R_{31}$ is an alkyl group having from 1 to 4 carbon atoms, preferably a methyl group; $R_{32}$ is an alkyl group having from 1 to 6 carbon atoms, preferably 2 to 4 carbon atoms; and $R_{33}$ is a hydrogen atom, a methyl group or an ethyl group, preferably a hydrogen atom or a methyl group. Examples of preferred hydrophobic vinyl monomers include vinyl acetate, styrene, acrylonitrile, alpha-methyl styrene, ethyl acrylate, methyl acrylate, ethyl methacrylate, methyl methacrylate, butyl acrylate, isobutyl acrylate, dodecyl acrylate, 2-ethylhexylacrylate, vinyl propionate, vinyl butyrate, propyl vinyl ether, butyl vinyl ether, isobutyl vinyl ether, vinyl chloride, vinylidene chloride, etc.

(2) $R_{23}$ and $R_{25}$ are each a hydrogen atom or a methyl group although it is preferred that both be a hydrogen atom;

(3) $R_{24}$ is a divalent hydrocarbon group having from 2 to 13 carbon atoms, such as alkylene groups having from 2 to 8 carbon atoms, cycloalkylene groups having from 6 to 8 carbon atoms, phenylene, and the like. Preferred divalent hydrocarbon groups include

$-C(CH_3)_2-CH_2-$, 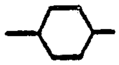, $-CH_2CH_2-$, $-CH_2CH_2CH_2-$, $-CH_2CH_2CH_2CH_2-$,

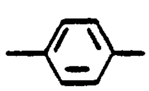, $-CH(CH_3)-CH_2-$, and 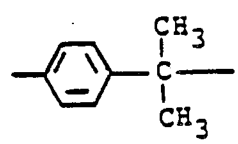

The most preferred $R_{24}$ grouping is —$C(CH_3)_2$—$CH_2$— which forms sodium "AMPS"® when $R_{23}$ = hydrogen and X is sodium;

(4) X is a monovalent cation such as a hydrogen atom, an ammonium group, an organoammonium group (see e.g. (I)), an alkali metal atom (e.g., Na or K), and the like. The most preferred cation is a sodium atom;

(5) $R_{26}$ and $R_{27}$ are each a hydrogen atom, a methyl group or an ethyl group although it is preferred that both be hydrogen atoms;

(6) m' is from 0 to about 10 mole %, preferably from about 0.2 to 5 mole %;

(7) n' is from about 1 to about 40 mole %, preferably from about 5 to about 20 mole %;

(8) p' is from about 50 to about 98.9 mole %, preferably from about 75 to about 95 mole %;

(9) m' + n' + p' = 100 mole %; and

(10) r' is a large positive integer to provide a polymer molecular weight of greater than 500,000 and preferably greater than 1,000,000.

Some of the acetoxy or alkoxy groups of $R_{29}$ (i.e., the

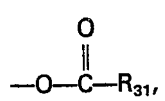

or —O—$R_{32}$ groups, respectively) may be hydrolyzed, resulting in a tetrapolymer which may be represented by the formula:

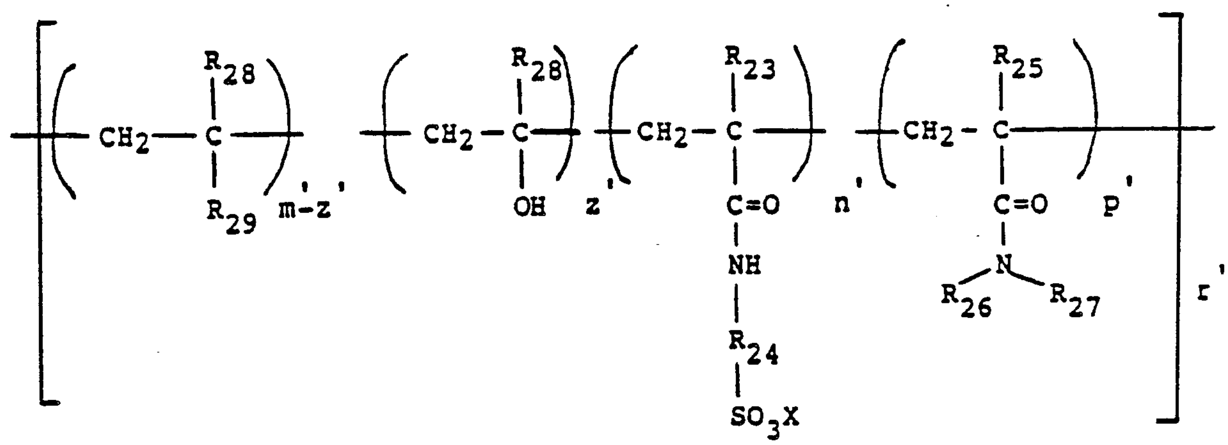

wherein $R_{23}$, $R_{24}$, $R_{25}$, $R_{26}$, $R_{27}$, $R_{28}$, $R_{29}$, X, m', n', p' and r' are as defined above, and z' is from 0 to less than about 10 mole % and wherein $(m' - z') + z' + n' + p' = 100$ mole %.

Alternatively, instead of defining the terpolymer repeating units as in (6)—(8) above, the terpolymer and its hydrolyzed derivative may be defined as that resulting from the polymerization of a water-in-oil monomer emulsion containing from 0 to about 20 mole %, preferably from 0 to about 10 mole % of monomer A', from about 1 to about 40 mole %, preferably from about 5 to about 20 mole %, of the $SO_3X$-containing monomer, and from about 50 to about 98.9 mole %, preferably from about 75 to about 95 mole %, of monomer

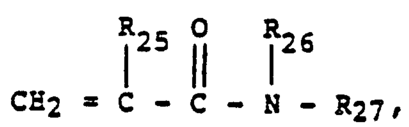

all based on the total moles of monomer in the emulsion.

A particularly preferred terpolymer is that resulting from the polymerization of a water-in-oil monomer emulsion containing from about 8 to about 12 mole % of sodium "AMPS"® monomer, from about 87 to about 91 mole % of acrylamide monomer, and from about 1 to about 5 mole % of vinyl acetate monomer. These terpolymers are especially useful in flocculating phosphate slimes.

Also among the polymers similar to those disclosed in the above-identified GB—A—2 136 440 and which may be made by the process of the invention are tetrapolymers of the following formula:

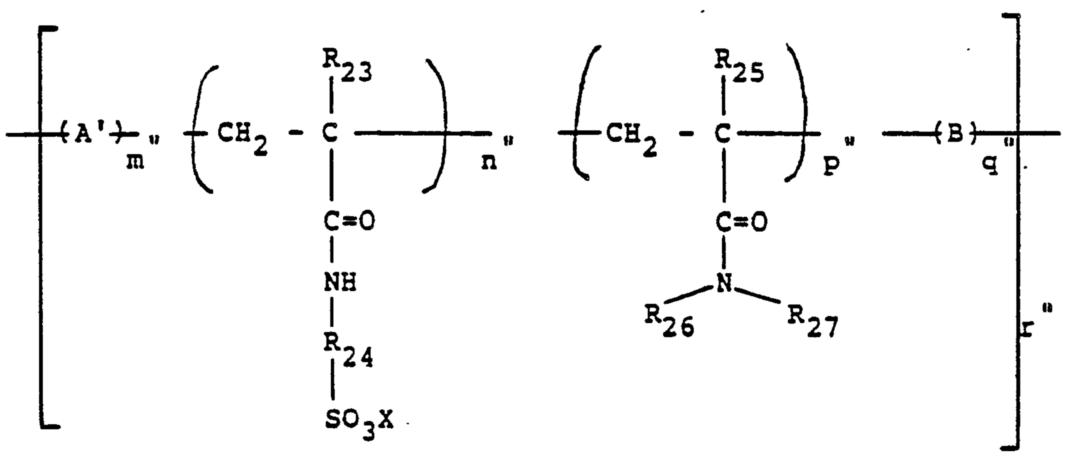

wherein A', $R_{23}$, $R_{24}$, $R_{25}$, $R_{26}$ and $R_{27}$ have the same meaning as above; wherein m'', n'', and r'' have the same meaning as m', n', and r', respectively, defined above; and wherein

(1) p'' is from about 20 to about 96.9 mole %, preferably from about 40 to about 86.9 mole %;

(2) q'' is greater than 0 and up to about 40 mole %, preferably from about 10 to about 30 mole %;

(3) B represents a repeating unit derived from an ethylenically-unsaturated monomer containing a carboxylic acid group such as acrylic acid, methacrylic acid, maleic acid, and the like, and salts thereof with alkali metals (e.g., sodium, potassium, etc.), ammonia (i.e., ammonium salts) and organic amines (e.g., ammonium salts represented by the formula $(R_{34})(R_{35})(R_{36})NH^+$ wherein $R_{34}$, $R_{35}$ and $R_{36}$ are each a hydrogen atom, an alkyl group having from 1 to 3 carbon atoms, or a hydroxyalkyl group having from 1 to 3

carbon atoms, such as a trimethylammonium group, a triethanolammonium group, etc.). The preferred B monomer is sodium acrylate.

Some of the acetoxy or alkoxy groups of the hydrophobic monomer A' may be hydrolyzed, resulting in a pentapolymer which may be represented by the formula:

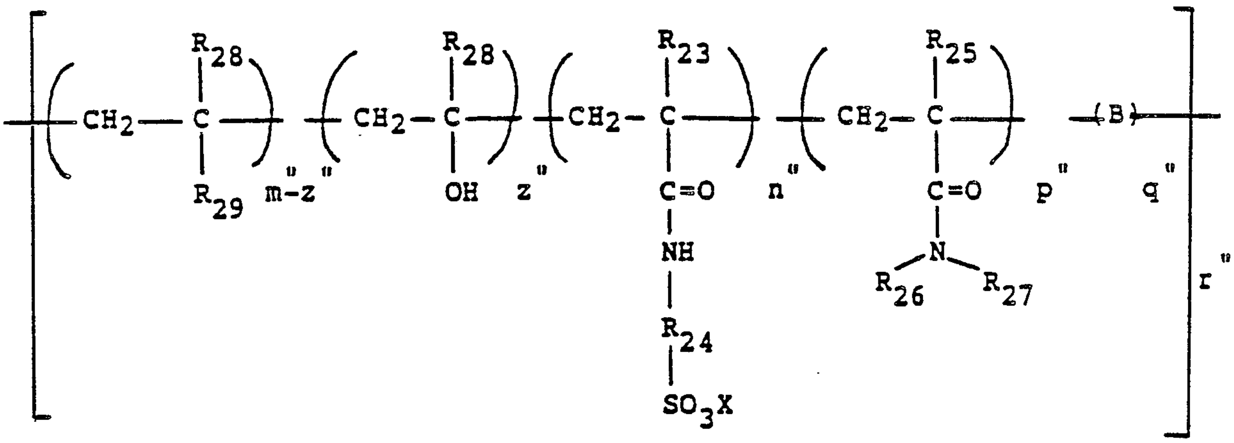

wherein $R_{23}$, $R_{24}$, $R_{25}$, $R_{26}$, $R_{27}$, $R_{28}$, $R_{29}$, X, B, m'', n'', p'' and r'' are as defined above, and z'' is from 0 to less than about 10 mole % and wherein $(m'' - z'') + z'' + n'' + p'' = 100$ mole %;

Alternatively, instead of defining the tetrapolymer repeating units as above, the tetrapolymer (and its hydrolyzed derivative) may be defined as that resulting from the polymerization of a water-in-oil monomer emulsion containing from 0 to about 20 mole %, preferably from 0 to about 10 mole % of monomer A', from about 1 to about 40 mole %, preferably from about 5 to about 20 mole %, of the $SO_3X$-containing monomer, from about 20 to about 96.9 mole %, preferably from about 40 to about 86.9 mole %, of monomer

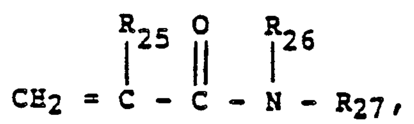

and greater than 0 to about 40 mole %, preferably from about 10 to about 30 mole %, of monomer "B", all based on the total moles of monomer in the emulsion.

A particularly preferred tetrapolymer is that resulting from the polymerization of a water-in-oil monomer emulsion containing from about 50 to about 70 mole % of acrylamide monomer, from about 6 to about 10 mole % of sodium "AMPS"® monomer, from about 1 to about 5 mole % vinyl acetate monomer and from about 20 to about 40 mole % of sodium acrylate monomer. Such tetrapolymers are especially useful in the flocculation of coal blackwater suspensions.

Other polymers which may be prepared by the process of the present invention may be represented by the general formula:

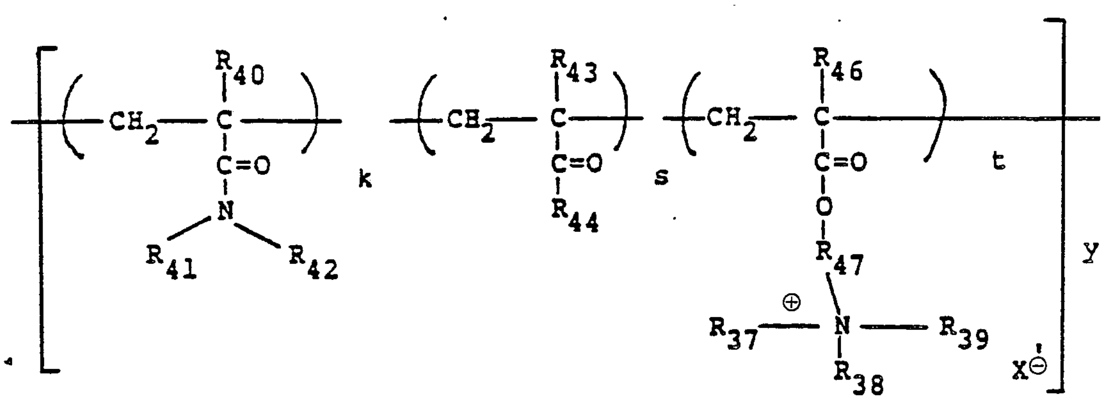

wherein $R_{40}$ represents either a hydrogen atom or a methyl group; $R_{41}$ and $R_{42}$ are each independently selected from a hydrogen atom, a methyl group and an ethyl group; $R_{43}$ is a hydrogen atom or a methyl group; $R_{44}$ represents $—OR_{45}$ or $—R_9—SO_3X$, wherein $R_{45}$ represents a hydrogen atom, an alkali metal atom (e.g. sodium, potassium), an ammonium group or an organoammonium group of the formula $(R_{37})(R_{38})(R_{39})NH^+$ (wherein $R_{37}$, $R_{38}$ and $R_{39}$ are as described hereinabove), $R_9$ is the same as $R_9$ defined above, and X represents a monovalent cation such as a hydrogen atom, an alkali metal atom (e.g. sodium,

potassium), an ammonium group or an organoammonium group of the formula $(R_{37})(R_{38})(R_{39})NH^+$ (wherein $R_{37}$, $R_{38}$ and $R_{39}$ are as defined above); $R_{46}$ is a hydrogen atom or a methyl group; $R_{47}$ represents a divalent alkylene group having from 1 to 3 carbon atoms; $R_{37}$ $R_{38}$ and $R_{39}$ are the same as defined above; and X′ represents a halogen atom (e.g., chlorine) or $R_{48}SO_4$ wherein $R_{48}$ is an alkyl group having from 1 to 4 carbon atoms; k is from about 20 to about 98.9 mole percent; s and t are each from about 1 to about 10 mole percent or alternatively s is 0 and t from about 1 to about 20 mole percent and where s is greater than 0, t is at least as large as s; and y is a large positive integer to provide a polymer having a molecular weight greater than 100,000.

Another type of polymer which may be prepared by the process of the present invention may be represented by the following general formula:

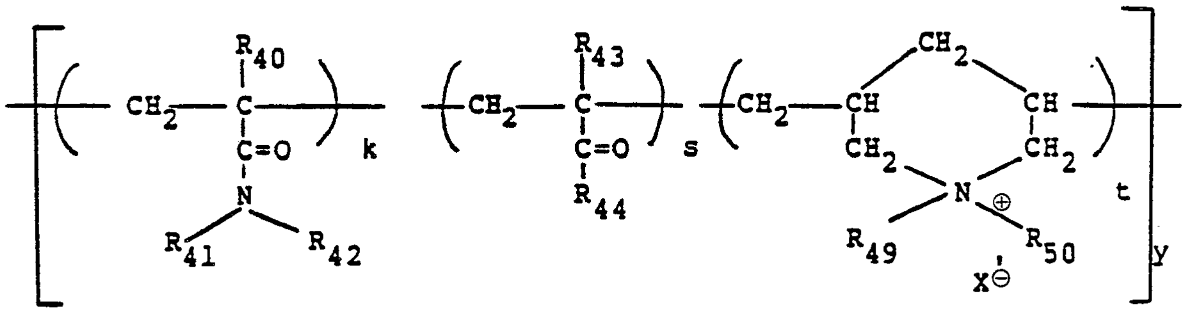

wherein $R_{40}$, $R_{41}$, $R_{42}$, $R_{43}$, $R_{44}$, $R_{45}$, X′, k, s, t and y are the same as defined above; and $R_{49}$ and $R_{50}$ are the same as $R_{37}$, $R_{38}$ and $R_{39}$ defined above. It is to be understood that in this general formula, as in the immediately preceding general formula, s may be 0 and t may be from about 1 to about 20 mole percent of the polymer and where s is greater than 0, t is at least as large as s. In both of these instances, the net charge of the polymer will be cationic in nature whereas if s and t are present in equal molar portions, the net polymer charge will be neutral. Similarly, where s is greater than t, the resulting net polymer will be anionic. The above N-hetero repeating group is $C_6H_{10}NR_{49}R_{50}X'$ (i.e., pyrrolidinium or piperidinium).

The present invention is illustrated, sometimes by comparison with prior art processes, by the following examples which describe work that was actually performed. These examples are meant to be illustrative only and are not intended to limit the invention thereby; rather, it is the intention that the invention be limited only by the scope of the claims appended hereto.

The intrinsic viscosities (I.V.) of the polymers were determined by forming an 0.3 weight % solution of the polymer in a 1N sodium chloride solution to make 0.5 weight percent, 0.25 weight percent and 0.125 weight percent polymer solutions. Using a Cannon-Ubbelohde viscometer, the reduced viscosities at different polymer concentrations were measured at 25°C. and those reduced viscosities were plotted against the solution polymer concentrations. The intrinsic viscosity (IV) is taken as the viscosity at zero concentration.

Example 1

This Example illustrates the fact that a monomer water-in-oil emulsion becomes shear-stable after a small amount of polymer is formed therein. Specifically, an acrylamide/sodium acrylate/vinyl acetate monomer water-in-oil emulsion was prepared as follows:

An aqueous solution was prepared by first neutralizing 11.3 parts of acrylic acid in 13.2 parts of distilled water with 15.8 parts of a 40% caustic solution. The resulting acrylate solution was then combined with another aqueous solution consisting of 14.7 parts of acrylamide crystals, 0.004 part EDTA and 18 parts of distilled water. An oil solution was prepared by mixing 24.2 parts of Isopar M®, 1.3 parts of Span 80® and 1.5 parts of vinyl acetate. The two solutions were used for the following experiments:

Appropriate portions of the above solutions were emulsified at different speeds in a Waring Blender to create different shear rate conditions and their viscosities were measured after mixing for 3 minutes at each speed using a Brookfield Viscometer (Model HBT, Spindle No. 1 at 25°C and 10 rpm). The data obtained are shown in Figure 3, curve a, of the drawings.

The remaining portions of the above solutions were emulsified to give a water-in-oil emulsion. One thousand grams of the monomer emulsion was charged into a reaction vessel equipped with a turbine agitator, nitrogen (air) inlet and outlet, addition funnel, condenser, a thermometer and an external bath used for either heating or cooling purposes.

The emulsion was degassed by sparging with nitrogen for 30 minutes at a rate of 650 cubic centimeters per minute. 20 percent of a polymerization initiator solution of 0.24 gram of VAZO 52® in 13.1 grams of toluene was then added and the nitrogen degassing was continued for an additional 15 minutes. Agitation was commenced at a rate of 650 rpm. The reaction temperatures varied with time as follows:

| Elapsed Time (Minutes) | Reaction Temperature (°C.) |
|---|---|
| 0 | 23 |
| 30 | 24 |
| 45 | 24 |
| 50 | 34 |
| 55 | 39 |
| 60 | 44 |
| 65 | 47 |
| 67 | 48.5 |
| 70 | 49.5 |
| 75 | 50.5 |
| 78 | 51.5 |
| 80 | 52 |
| 85 | 51.5 |
| 88 | 53 |
| 90 | 52.5 |
| 93 | 52 |

At each of 65 minutes, 75 minutes and 85 minutes elapsed time, an additional 1.5 milliliters of the polymerization initiator solution was added. The reaction was stopped after 93 minutes with air injection and by immersing the reactor in an ice/water bath. About one-half of the reaction mixture was removed and 5 grams of an antioxidant solution (i.e., 0.2 gram of thiobisphenol, available from Monsanto under its trade name Santonox-R® in 4 grams of toluene) was added to this portion. It was determined by coagulation in isopropanol that the removed portion had about 1.3 percent polymer conversion. The viscosities of this portion were measured at different Waring Blender speeds and the results are shown in Figure 3, in curve b.

The reaction was continued with the remainder of the reaction mixture for an additional period of time and the reaction temperature was controlled as follows:

| Elapsed Time (Minutes) | Reaction Temperature (°C.) |
|---|---|
| 0 | 41 |
| 3 | 43 |
| 8 | 45 |
| 13 | 47 |
| 18 | 50 |
| 21 | 51 |
| 23 | 52 |
| 28 | 54 |
| 33 | 54 |
| 34 | 55 |

At each of the elapsed times of 13, 23 and 33 minutes, an additional 1.5 milliliters of the polymerization initiator solution was added. At the end of 34 minutes of additional elapsed time, the reaction was stopped by air injection and by the addition of Santonox-R® inhibitor in the same manner as before. It was determined by the coagulation time that this portion of the reaction mixture was at about 58.9 percent polymer conversion. The viscosities of this portion were also measured at different Waring Blender speeds and the results are shown in Figure 3, in curve c. Figure 3, curve d, illustrates the viscosities of the final product of a batch produced from an identical monomer emulsion formulation. The blending time at each particular speed was 3 minutes. Based upon the results as shown in Figure 3, it is seen that the original monomer emulsion is highly sensitive to the shear rate but significantly, once a small amount of polymer conversion has taken place, the emulsion becomes essentially resistant to shear.

Example 2 (Prior Art)

Into a 19 l (five-gallon), jacketed, stainless steel reactor, equipped with a straight blade turbine agitator and a circulating loop equipped with a centrifugal pump (ECO Model C-5D) and a heat exchanger (i.e., an American Standard SSCF 47113012A25 heat exchanger with 6.3 mm (¼ inch) tubes and 0.11 $m^2$ (1.2 square feet) of heat transfer area, was charged 6.33 kg (13.95 pounds) of deionized water and 2.07 kg (4.57 pounds) of acrylic acid, with agitation. To the resulting solution was slowly added with cooling about 2.31 kg (5.1 pounds) of a 50% sodium hydroxide solution, titrating to a pH of 7.63. Thereafter, 2.41 kg (5.31 pounds) of crystalline acrylamide and 0.76 gram of sodium ethylene diamine tetraacetate is added. Following that addition, and once the agitation was stopped and the aqueous phase quiescent, a mixture of 3.98 kg (8.78 pounds) of an aliphatic hydrocarbon (i.e., available from Exxon Chemical Company under its trademark ISOPAR M®), 225 grams of sorbitan monooleate (i.e., available from I.C.I. under its tradename SPAN 80®) and 247 grams of vinyl acetate was added and the agitation was then restarted at high speed to form a monomer water-in-oil emulsion. The reactor was then sparged with nitrogen at a rate of 5 SCFH for 105 minutes. Circulation of the emulsion through the circulating loop was started at a pump speed to give about 3.6 kg (8 pounds) per minute flow rate. About 20% of a solution of 4.47 grams of 2,2′-azobis-(2,4-dimethylvaleronitrile) (i.e., available from E. I. du Pont de Nemours & Co. under its trademark VAZO 52®) in 152.5 grams of toluene was added and the reactor was heated to 52°C and controlled to 52°C ± 2°C. Agitation was maintained throughout the course of the reaction and the remaining initiator solution (i.e., the VAZO 52® solution) was added incrementally over a period of about 4 hours. Throughout that time, the emulsion was pumped through the circulating loop heat exchanger to cool the emulsion during the polymerization process. An ethylene glycol water solution at a temperature of 5°C was employed as the coolant in the heat exchanger. At the conclusion of the polymerization, the reactor was cooled to 30°C. The I.V. of the polymer thus produced was 23.1 dl-g.

However, the product emulsion contained many gel bodies and was incapable of being filtered through cheesecloth.

Example 3 (Prior Art)

Example 2 was repeated except that a pump speed sufficient to give a flow rate of about 8.2 kg (18 pounds) per minute was employed for the circulating pump. The entire batch gelled and no product was obtained.

Example 4 (Prior Art)

The procedure of Example 2 was followed except that instead of the centrifugal pump used in Example 2, a Viking Model H-7124 pump was used (which provides a flow rate of about 60.5 l (16 gallons) per minute) in the circulating loop. The emulsion gelled and no useful product was obtained.

Example 5 (Prior Art)

The procedure of Example 4 was repeated with the same result: the emulsion gelled and no usable product was obtained.

Example 6 (Prior Art)

The procedure of Example 2 was repeated except that a different pump was employed; specifically, an ECO Model C-10 centrifugal pump. This pump was employed to provide a flow rate in the circulating loop of about 18.1 kg (40 pounds) per minute. A polymer having an I.V. of 27.8 dl-g was obtained with no noticeable gel formation.

Example 7 (Prior Art)

The procedure of Example 6 was followed using the same circulation rate. The emulsion was gelled and no useful product was obtained.

Example 8 (Prior Art)

Into a glass-lined, 1890-l (500-gallon) reactor, equipped with a turbine agitator, heating and cooling jacket, air (nitrogen) inlet and outlet, temperature control instruments, and a dissolved oxygen meter, there was charged 248.5 kg (547.9 pounds) of deionized water, 89.58 kg (197.5 pounds) of acrylic acid, and about

126 kg (278 pounds) of a 40% sodium hydroxide solution. The reaction mixture was kept at or below 25°C during the course of neutralization. Thereafter, 116.44 kg (256.7 pounds) of acrylamide crystals and 0.035 kg (0.077 pound) of ethylenediamine tetraacetic acid (EDTA) were introduced. In a separate 378-l (100-gallon) vessel, an oil solution was prepared by mixing 192.3 kg (423.9 pounds) of Isopar M®, 10.75 kg (23.7 pounds) of Span 80® and 12.02 kg (26.5 pounds) of vinyl acetate monomer. The oil solution was pumped into the 1890-l (500-gallon) reactor, and a water-in-oil emulsion was generated by high-speed mixing. The monomer emulsion was subsequently deaerated by nitrogen sparging.

The deaerated monomer emulsion was heated through the heating jacket. When the reaction temperature reached 30°C, an initiator solution consisting of 0.218 kg (0.48 pound) of VAZO-52® in 10.464 kg (23.07 pounds) of toluene was fed into the reactor at an initial rate of 3.22 kg (7.1 pounds) of solution per hour. The polymerization was maintained at 52 ± 2°C by controlling the rate of initiator feed, jacket cooling, and intermittent air sparging. When the polymerization was complete, the reactor was allowed to cool down to room temperature and a solution consisting of 0.222 kg (0.49 pound) of Santonox-R® and 5.13 kg (11.31 pounds) of toluene was added. The product was then discharged through a filter to remove any agglomerated particles or gels. The reaction was repeated three additional times and in all cases there were some gels found on the surface of the agitator, sparging tubes, and reactor wall. The total amount of gel in each run was collected, weighed, and recorded. The results are shown below in Table I.

| Run | Intrinsic Viscosity* (dl/g) | Total Gel Content (weight % of product) |
|---|---|---|
| 1 | 7.5 | 61 |
| 2 | 21.17 | 3.8 |
| 3 | 17.0 | 5.4 |
| 4 | 19.2 | 1 |

* measured in 1N sodium chloride solution

Example 9 (Prior Art)

Into a 227 l (60-gallon) stainless steel reactor, equipped with a turbine agitator, heating or cooling jacket, nitrogen (air) inlet and outlet, temperature control instruments, and initiator and monomer emulsion feeding tubes, there was charged 14.456 kg (31.87 pounds) of acrylic acid, 56.7 kg (125 pounds) of deionized water, and about 20 kg (44.2 pounds) of a 40% aqueous sodium hydroxide solution. The reaction mixture was kept below or at 25°C during the entire course of the neutralization. Thereafter, 23.85 kg (52.58 pounds) of crystalline acrylamide and 6.8 g (0.015 pound) of EDTA were introduced. In a separate stainless pot, an oil solution was prepared by mixing 39.31 kg (86.67 pounds) of Isopar M®, 2.214 kg (4.88 pounds) of Span 80®, and 7.7 kg (17 pounds) of ethyl acrylate. The oil solution was introduced into the reactor and a gentle mixing was applied to generate a crude water-in-oil emulsion. The latter was pumped through an in-line Morton-Gaulin Model 100-KLB-885 Homogenizer to yield a much finer particle size emulsion. The fine monomer emulsion was stored in a vertical tank, equipped with a circulating loop for mixing purposes, where it was deaerated through nitrogen sparging.

Once the deaeration was complete, 43.5 kg (96 pounds) of the deaerated monomer emulsion was transferred back to the 227-l (60-gallon) reactor under a nitrogen blanket. An initiator solution composed of 91 g (0.2 pound) of 2,2'-azobis(isobutyronitrile) (available from E. I. Du Pont de Nemours & Co. under its trademark VAZO-64®) and 1.8 kg (4 pounds) of toluene was prepared. The monomer emulsion was heated up using the heating jacket, and 0.45 kg (1 pound) of the initiator solution was introduced when the reaction temperature reached 40°C. When the reaction temperature reached 55 ± 2°C the rest of the monomer emulsion was fed continuously into the reactor at a rate of about 30.2 kg (66.5 pounds)/hour. At the same time, the remaining initiator solution was also fed into the reactor at a rate of about 0.45 kg (1 pound)/hour. The polymerization temperature was controlled by controlling the rates of feeding monomer emulsion and the initiator solution and by cooling and occasional air sparging. At the end of the polymerization, the reactor was cooled to room temperature and a solution consisting of 91 g (0.2 pound) of Santonox-R® in 1.52 kg (3.35 pounds) of toluene was added. The product was discharged through a paint filter and the amount of gels collected, weighed, and recorded. The reaction was repeated eight times, the last five of which used ethyl acrylate instead of vinyl acetate.

In all cases, from relatively small to substantial amounts of gels were found in the product. The results are shown in Table II below:

| Run | Hydrophobic Monomer* | Intrinsic Viscosity** (dl/g) | Total Gel Content (weight % of product) |
|---|---|---|---|
| 1 | VAc | 13.7 | 1.2 |
| 2 | VAc | 19.9 | 14 |
| 3 | VAc | 16.6 | 2.2 |
| 4 | VAc | 16.6 | 1.2 |
| 5 | EA | — | 32 |
| 6 | EA | 13.3 | 1.6 |
| 7 | EA | 13.5 | 20 |
| 8 | EA | 13.3 | 2 |
| 9 | EA | 16.4 | 15 |

* VAc = vinyl acetate; EA = ethyl acrylate
** measured in 1N sodium chloride solution

## Claims

1. A process for producing water-in-oil emulsions of a polymer from at least one ethylenically-unsaturated, water-soluble monomer comprising the steps of

(a) forming a water-in-oil emulsion of at least one ethylenically-unsaturated, water-soluble monomer;

(b) forming a small amount of polymer of said monomer in said emulsion to provide a shear-stable emulsion, and thereafter

(c) completing the polymerization of said monomer in said emulsion,

characterized in that a single polymerization initiator is employed to form said shear-stable emulsion and complete said polymerization.

2. The process of Claim 1 wherein said monomer emulsion comprises water, at least one water-soluble, ethylenically unsaturated monomer, a hydrophobic liquid and an oil-soluble surfactant.

3. The process of one or both of the Claims 1—2 wherein said emulsion also contains at least one hydrophobic monomer.

4. The process of one or more of the claims 1—3 wherein said shear-stable emulsion is obtained at a temperature lower than the temperature at which said polymerization is completed.

5. The process of Claim 4 further comprising cooling said emulsion during polymerization by continuously withdrawing at least a portion of said emulsion and circulating said portion through an external heat exchanger loop back into said polymerization.

6. The process of one or more of the Claims 1—5 wherein said monomer comprises at least one monomer selected from the group consisting of (1) acrylic and methacrylic acid, derivates and salts thereof of the formula

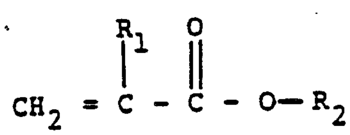

wherein $R_1$ is a hydrogen atom or a methyl group; $R_2$ is a hydrogen atom, an alkali metal atom, an ammonium group, an organoammonium group of the formula $(R_3)(R_4)(R_5)NH^+$ (wherein $R_3$, $R_4$ and $R_5$ are independently selected from a hydrogen atom, an alkyl group having from 1 to 18 carbon atoms; an aryl group or a hydroxyalkyl group or mixtures thereof; (2) acrylamide and methacrylamide and derivatives thereof of the formula:

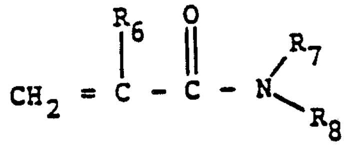

wherein $R_6$ is a hydrogen atom or a methyl group; $R_7$ is a hydrogen atom, a methyl group or an ethyl group;

$R_8$ is a hydrogen atom, a methyl group, an ethyl group or —$R_9$—$SO_3X$, wherein $R_9$ is a divalent hydrocarbon group having 1 to 13 carbon atoms and X is a monovalent cation; (3) vinyl sulfonates; (4) olefinic dicarboxylic acids; and (5) less than 20 mole %, based on the total monomers, of vinyl monomers of the formula

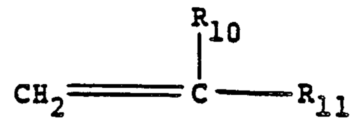

wherein $R_{10}$ is a hydrogen atom or a methyl group and $R_{11}$ is

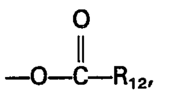

a halogen atom, —O—$R_{13}$,

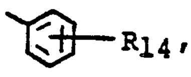

or

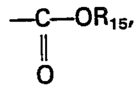

wherein $R_{15}$ is an alkyl, an aryl or an aralkyl group having from 1 to 18 carbon atoms, wherein $R_{12}$ is an alkyl group having from 1 to 8 carbon atoms, $R_{13}$ is an alkyl group having from 1 to 6 carbon atoms, $R_{14}$ is a hydrogen atom, a methyl group, an ethyl group or a halogen atom.

7. The process of Claims 1—6 wherein the water-in-oil emulsion contains at least one hydrophobic monomer having a water solubility of less than about 5 weight percent, e.g. selected from the group consisting of vinyl esters, alkyl acrylates, alkyl methacrylates, vinyl ethers, acrylonitrile, styrene, N-vinyl carbazole, and vinyl halides.

8. The process of one or more of the Claims 1—7 wherein said water-soluble monomer is selected from the group consisting of acrylic and methacrylic acids, derivates and salts thereof; acrylamide; methacrylamide; and acrylamido- and methacrylamido monomers of the formula

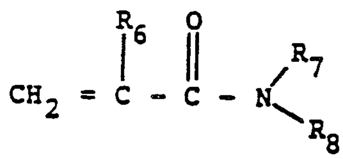

wherein $R_6$ is a hydrogen atom or a methyl group; $R_7$ is a hydrogen atom or an alkyl group having from 1 to 2 carbon atoms; $R_8$ is a hydrogen atom, an alkyl group having from 1 to 2 carbon atoms or —$R_9$—$SO_3X$ wherein $R_9$ is a divalent hydrocarbon group having from 1 to 13 carbon atoms and X is a monovalent cation.

9. The process of one or more of the Claims 2—8 wherein said hydrophobic liquid is selected from the group consisting of benzene, xylene, toluene, mineral oils, kerosenes, petroleum and mixtures thereof.

10. The process of one or more of the Claims 2—9 wherein said oil-soluble surfactant has a Hydrophile-Lipophile Balance (HLB) of from about 1 to about 10.

11. The process of one or more of the Claims 1—10 wherein said polymer is represented by the following formula:

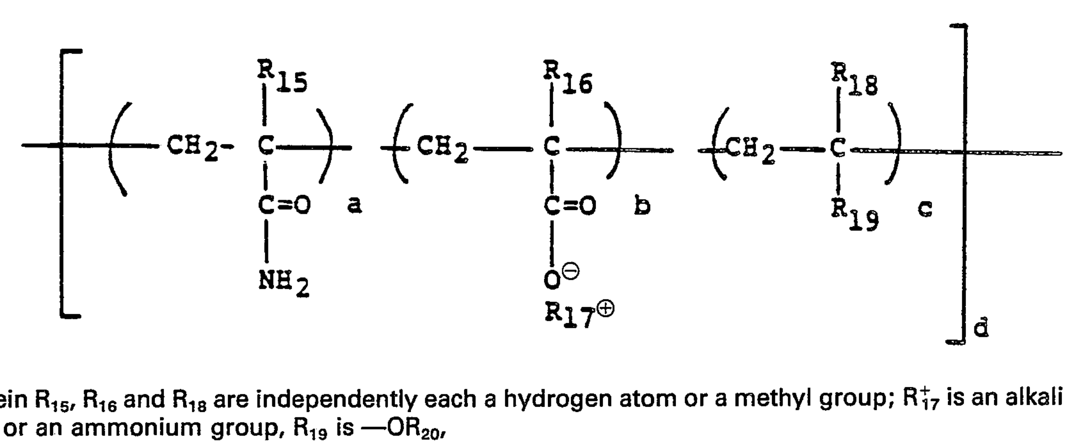

wherein $R_{15}$, $R_{16}$ and $R_{18}$ are independently each a hydrogen atom or a methyl group; $R_{17}^{+}$ is an alkali metal atom or an ammonium group, $R_{19}$ is —$OR_{20}$,

phenyl, substituted phenyl, —CN, 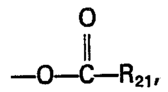

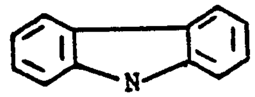 ; or 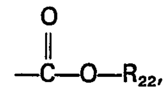

wherein $R_{20}$ is an alkyl group having up to 5 carbon atoms wherein $R_{21}$ is a methyl, ethyl or butyl group, and wherein $R_{22}$ is an alkyl group having up to 8 carbon atoms; a is from about 5 to about 90 mole %, b is from about 5 to about 90 mole %, c is from 0 to about 20 mole % with the proviso that a + b + c = 100 mole %; and d is an integer of from about 1,000 to about 500,000.

12. The process of claim 11 wherein said polymer is a terpolymer represented by the formula:

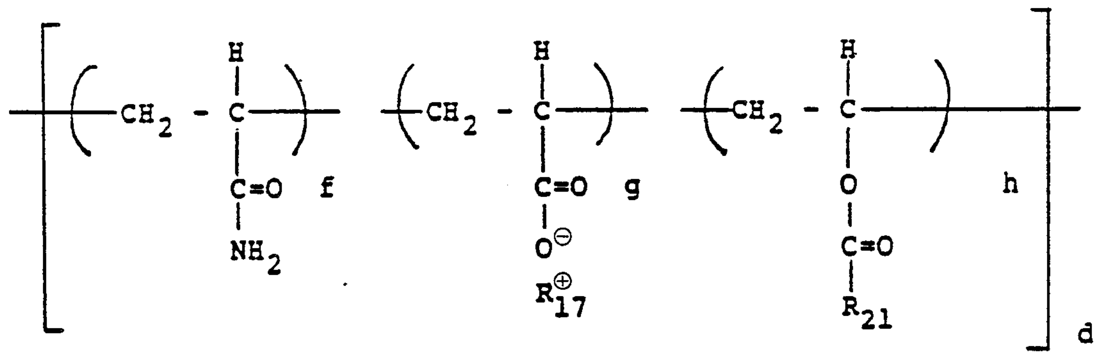

wherein $R_{17}+$ is Na+, or K+ or $NH_4+$; $R_{21}$ is a methyl, ethyl or butyl group; f is from about 30 to about 60 mole %, g is from about 30 to about 60 mole % and h is from 0 to about 20 mole %, with the proviso that f + g + h = 100 mole %, and d is defined as in Claim 11.

13. The process of one or more of the Claims 1—10 wherein said polymer is represented by the following formula:

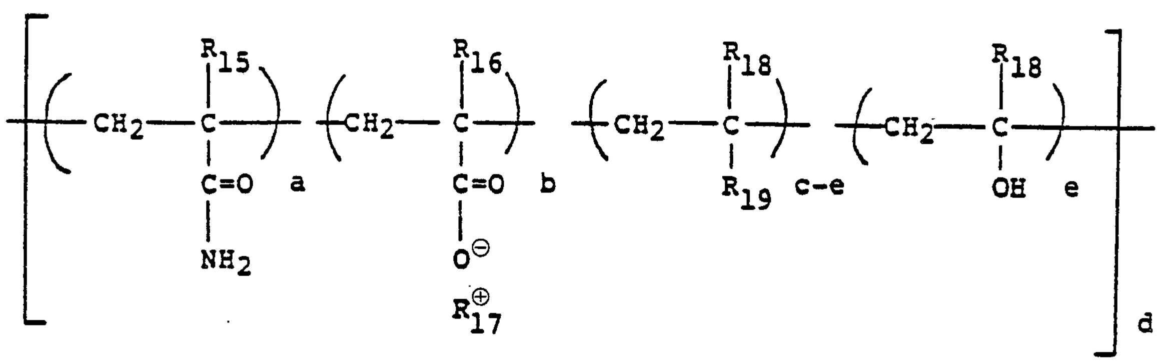

wherein $R_{15}$, $R_{16}$, $R_{17}^{+}$, $R_{18}$, $R_{19}$, a, b, c and d are as defined in Claim 11; wherein e is from 0 to less than about 20 mole % and with the proviso a + b + (c − e) + e = 100 mole %.

14. The process of Claim 13 wherein said polymer is represented by the formula:

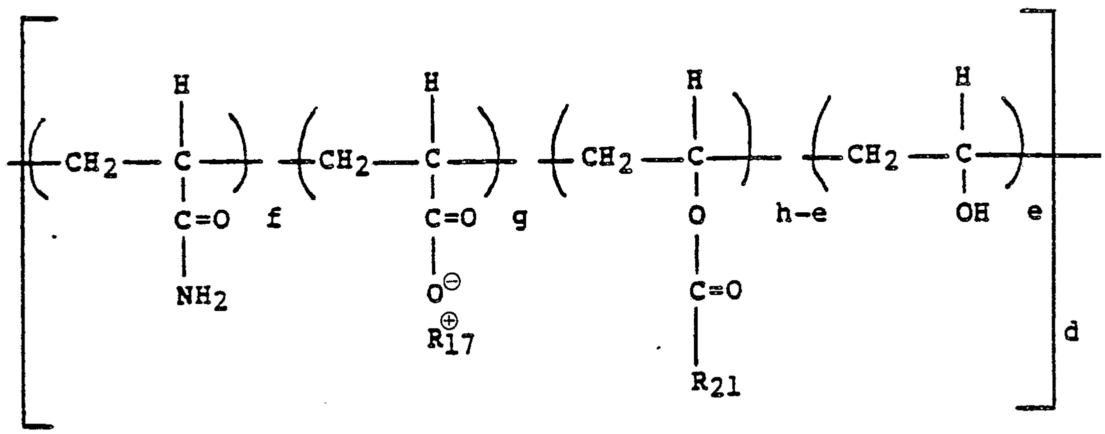

wherein $R_{17}$, $R_{21}$, f, g and h are as defined in Claim 12; wherein e is from 0 to about 20 mole %, with the proviso that $f + g + (h - e) + e = 100$ mole %.

15. The process of one or more of the Claims 1—10 wherein said polymer is represented by the formula

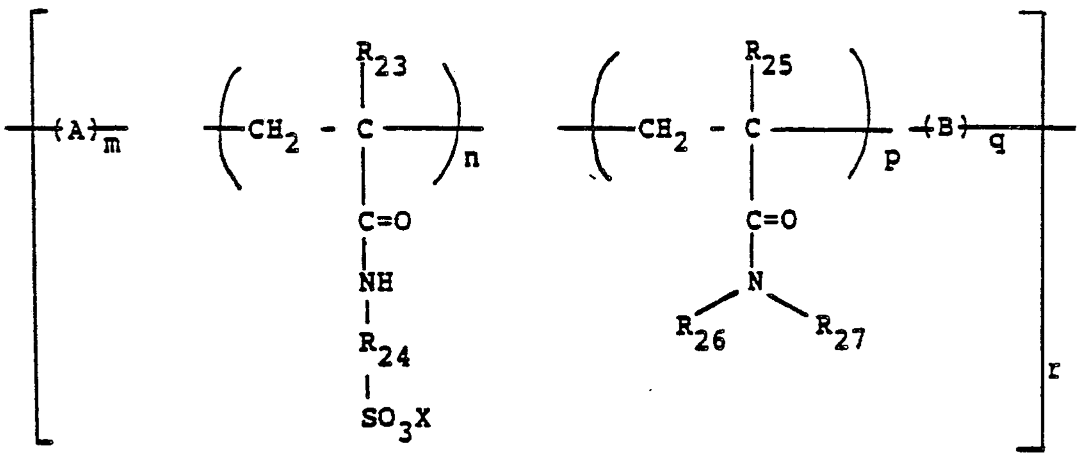

wherein A represents a repeating unit derived from a hydrophobic vinyl monomer having a water-solubility of less than about 5 weight percent; $R_{23}$ and $R_{25}$ are each a hydrogen atom or a methyl group; $R_{26}$ and $R_{27}$ are each independently a hydrogen atom, a methyl group or an ethyl group; $R_{24}$ represents a divalent hydrocarbon group having from 2 to 13 carbon atoms; X represents a monovalent cation; B represents a repeating unit derived from an ethylenically-unsaturated carboxylic acid or a salt thereof; m is 0 to about 10 mole %, n is from about 1 to about 40 mole %, p is from about 20 to about 98.9 mole % and q is 0 to about 40 mole %, with the proviso that $m + n + p + q = 100$ mole %; and r is a large positive integer.

16. The process of Claim 15 wherein said polymer is a terpolymer represented by the formula:

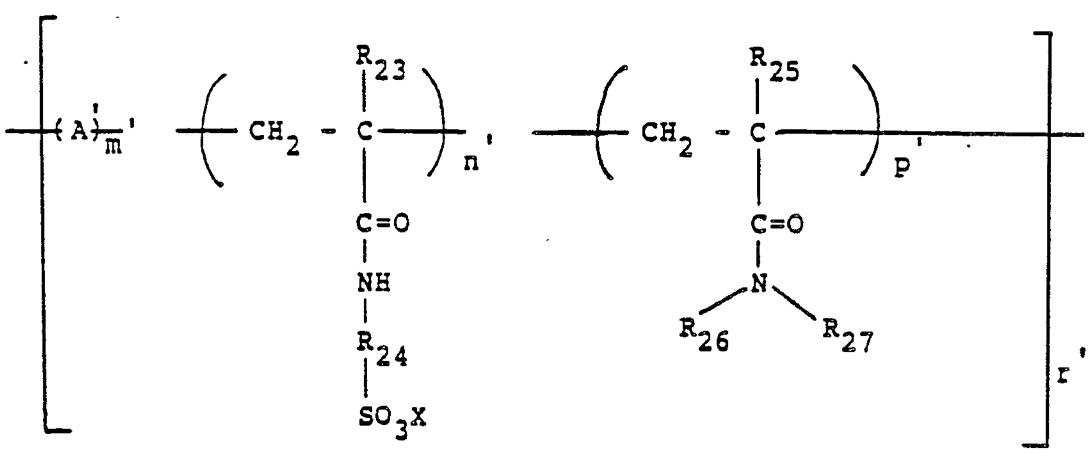

wherein A′ represents

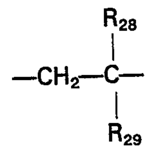

wherein $R_{28}$ is —H or —$CH_3$ and $R_{29}$ is

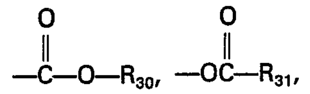

a halogen atom, —O—$R_{32}$, —CN or

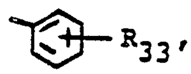

wherein $R_{30}$ is an alkyl group having from 1 to 12 carbon atoms, $R_{31}$ is an alkyl group having from 1 to 4 carbon atoms, $R_{32}$ is an alkyl group having from 1 to 6 carbon atoms, and $R_{33}$ is a hydrogen atom, a methyl group or an ethyl group; $R_{24}$ is an alkylene group having from 2 to 8 carbon atoms, a cycloalkylene group having from 6 to 8 carbon atoms or phenylene; $R_{23}$ and $R_{25}$ are each a hydrogen atom or a methyl group; $R_{26}$ and $R_{27}$ are each a hydrogen atom, a methyl group or an ethyl group; X is a hydrogen atom, an ammonium group, an organo-ammonium group or an alkali metal atom, m′ and n′ are the same as m and n, respectively, and p′ is from about 50 to 98.9 mole %, wherein m′ + n′ + p′ = 100 mole %; and wherein r′ is a large positive integer such that the molecular weight of the polymer is greater than 500,000.

17. The process of Claim 16 wherein said polymer is represented by the following formula:

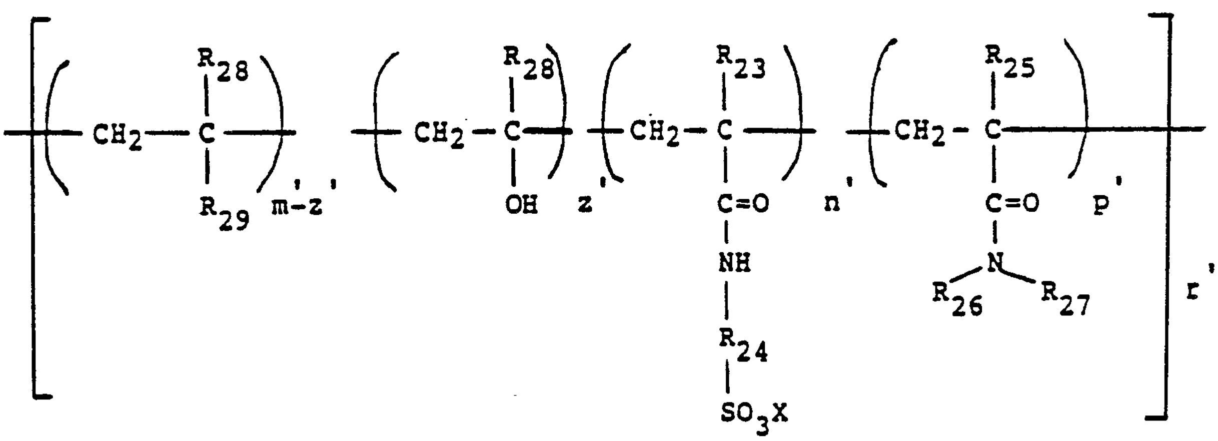

wherein $R_{23}$, $R_{24}$, $R_{25}$, $R_{26}$, $R_{27}$, $R_{28}$, $R_{29}$, X, m′, n′, p′ and r′ are as defined in Claim 16, and wherein z′ is from 0 to less than about 10 mole % and wherein (m′ − z′) + n′ + p′ + z′ = 100 mole %.

18. The process of Claim 16 wherein said terpolymer comprises a polymer resulting from the polymerization of a water-in-oil monomer emulsion containing from about 8 to about 12 mole % sodium-2-acrylamido-2-methylpropane sulfonate monomer, from about 87 to about 91 mole % acrylamide monomer and from about 1 to about 5 mole % of vinyl acetate monomer.

19. The process of Claim 15 wherein said polymer is a tetrapolymer represented by the formula:

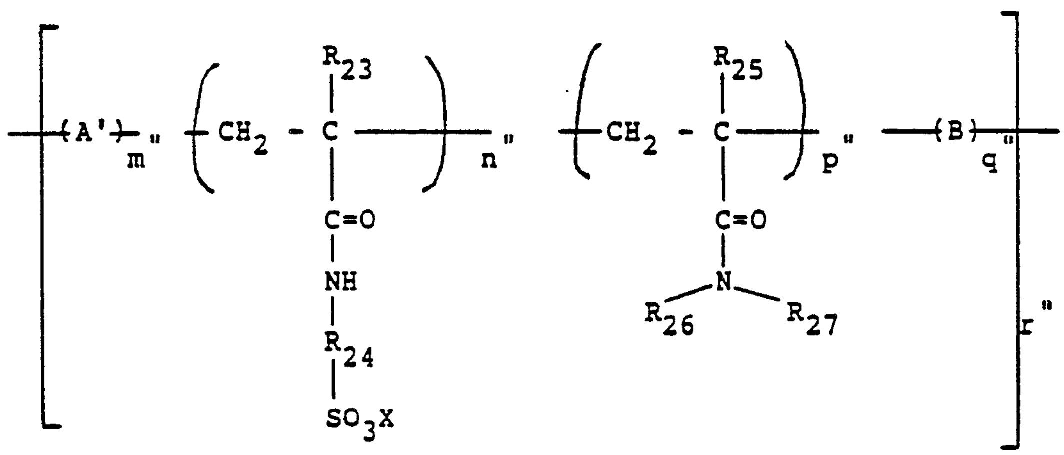

wherein A', $R_{23}$, $R_{24}$, $R_{25}$, $R_{26}$ and $R_{27}$ are as defined in Claim 15; wherein m'', n'' and r'' have the same meaning as m, n and r, respectively; wherein p'' is from about 20 to 96.9 mole %; wherein q'' is greater than 0 and up to about 40 mole %, with the proviso that m'' + n'' + p'' + q'' = 100 mole %; and wherein B represents a repeating unit derived from a member selected from the group consisting of acrylic and methacrylic acids, maleic acid, and alkali metal salts thereof.

20. The process of Claim 19 wherein said tetrapolymer is at least partially hydrolyzed and is represented by the following formula:

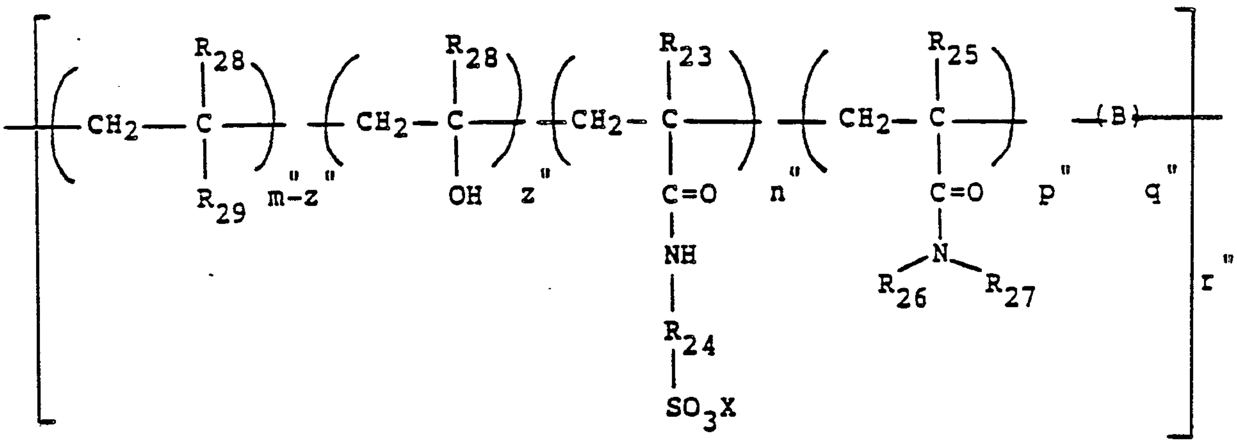

wherein $R_{23}$, $R_{24}$, $R_{25}$, $R_{26}$, $R_{27}$, $R_{28}$, $R_{29}$, X, B, m'', n'', p'', q'' and r'' are as defined in Claim 19; $R_{28}$, $R_{25}$ and X are as defined in Claim 16; and wherein z'' is from 0 to less than about 10 mole %, with the proviso that (m'' − z'') + n'' + p'' + q'' + z'' = 100 mole %.

21. The process of Claim 19 wherein said tetrapolymer comprises a polymer resulting from the polymerization of a water-in-oil monomer emulsion containing from about 6 to about 10 mole % of sodium-2-acrylamido-2-methylpropane sulfonate monomer, from about 50 to about 70 mole % of acrylamide monomer, from about 1 to about 5 mole % of vinyl acetate monomer and from about 20 to about 40 mole % of sodium acrylate monomer.

22. The process of one or more of the Claims 1—10 wherein said polymer is represented by the following formula:

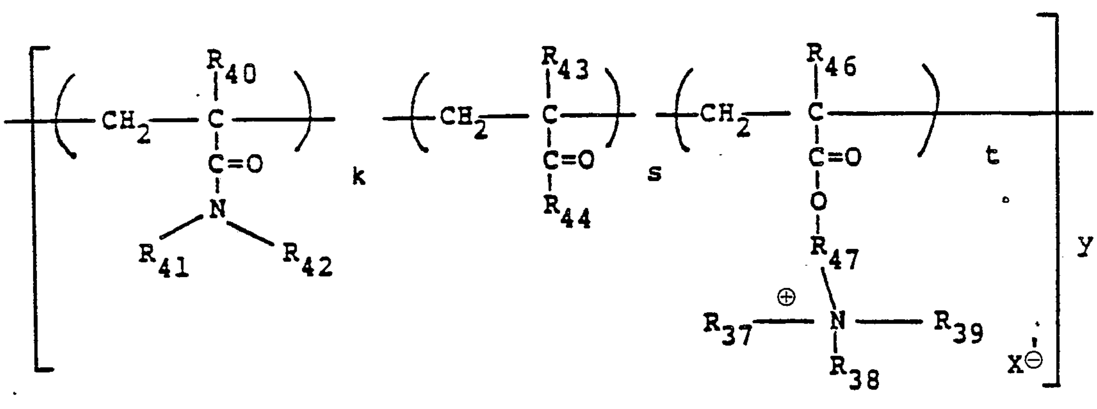

wherein $R_{40}$ is hydrogen or methyl; $R_{41}$ and $R_{42}$ are each selected from hydrogen, methyl and ethyl; $R_{43}$ is hydrogen or methyl; $R_{44}$ is $—OR_{45}$ or $—R_9SO_3X$, wherein $R_{45}$ is hydrogen, an alkali metal, an ammonium group or an organoammonium group of the formula $(R_{37})(R_{38})(R_{39})NH^+$ wherein $R_{37}$, $R_{38}$ and $R_{39}$ are each selected from hydrogen, alkyl having from 1 to 18 carbon atoms, aryl, hydroxyalkyl having from 1 to 3 carbon atoms or mixtures thereof; $R_9$ is a divalent hydrocarbon having 1 to 13 carbon atoms, X is a monovalent cation; $R_{46}$ is hydrogen or methyl; $R_{47}$ is divalent alkylene having from 1 to 3 carbon atoms; X' is halogen or $R_{48}SO_4$, wherein $R_{48}$ is alkyl having from 1 to 4 carbon atoms; k is from about 20 to about 98.9 mole percent; s and t are each from about 1 to about 10 mole percent or alternatively s is 0 and t is from about 1 to about 20 mole percent; and y is a large positive integer to provide a polymer having a molecular weight greater than 100,000.

23. The process of one or more of the Claims 1—10 wherein said polymer is represented by the following formula:

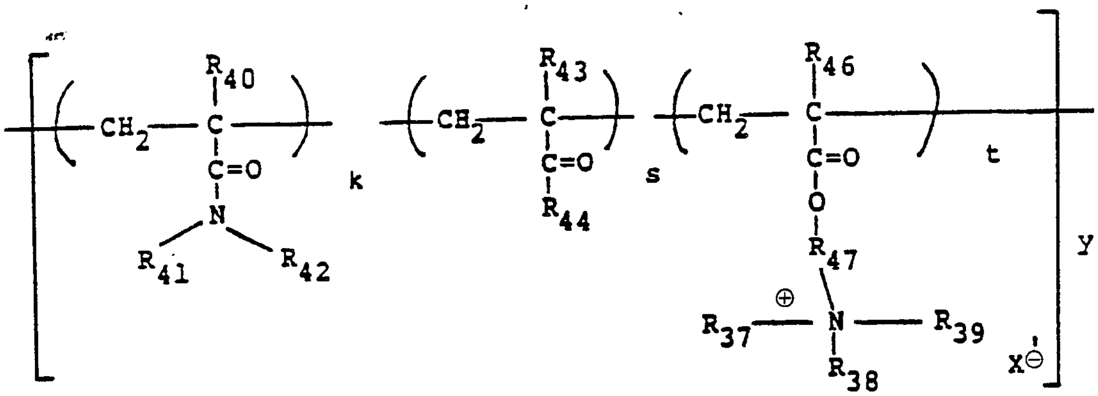

wherein $R_{40}$ is hydrogen or methyl; $R_{41}$ and $R_{42}$ are each selected from hydrogen, methyl and ethyl; $R_{43}$ is hydrogen or methyl; $R_{44}$ is —$OR_{45}$ or —$R_9SO_3X$, wherein $R_{45}$ is hydrogen, an alkali metal, an ammonium group or an organoammonium group of the formula $(R_{37})(R_{38})(R_{39})NH^+$ wherein $R_{37}$, $R_{38}$ and $R_{39}$ are each selected from hydrogen, alkyl having from 1 to 18 carbon atoms, aryl, hydroxyalkyl having from 1 to 3 carbon atoms or mixtures thereof; $R_9$ is a divalent hydrocarbon having 1 to 13 carbon atoms, X is a monovalent cation; $R_{46}$ is hydrogen or methyl; $R_{47}$ is divalent alkylene having from 1 to 3 carbon atoms; X' is halogen or $R_{48}SO_4$, wherein $R_{48}$ is alkyl having from 1 to 4 carbon atoms; k is from about 20 to about 98.9 mole percent; s and t are each from about 1 to about 10 mole percent and wherein s and t are the same; and y is a large positive integer to provide a polymer having a molecular weight greater than 100,000.

24. The process of one or more of the Claims 1—10 wherein said polymer is represented by the formula:

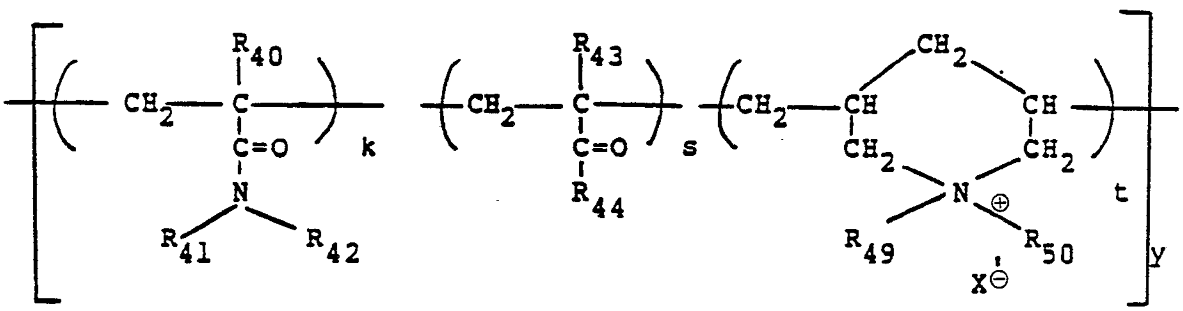

wherein $R_{40}$ is hydrogen or methyl; $R_{41}$ and $R_{42}$ are each selected from hydrogen, methyl and ethyl; $R_{43}$ is hydrogen or methyl; $R_{44}$ is —$OR_{45}$ or —$R_9SO_3X$, wherein $R_{45}$ is hydrogen, an alkali metal, an ammonium group or an organoammonium group of the formula $(R_{37})(R_{38})(R_{39})NH^+$ wherein $R_{37}$, $R_{38}$ and $R_{39}$ and $R_{49}$ and $R_{50}$ are each selected from hydrogen, alkyl having from 1 to 18 carbon atoms, aryl, hydroxyalkyl having from 1 to 3 carbon atoms or mixtures thereof; $R_9$ is a divalent hydrocarbon having 1 to 13 carbon atoms, X is a monovalent cation; X' is halogen or $R_{48}SO_4$, wherein $R_{48}$ is alkyl having from 1 to 4 carbon atoms; k is from about 20 to about 98.9 mole percent; s and t are each from about 1 to about 10 mole percent or alternatively s is 0 and t is from about 1 to about 20 mole percent; and y is a large positive integer to provide a polymer having a molecular weight greater than 100,000.

25. The process of one or more of the Claims 1—10 wherein said polymer is represented by the formula:

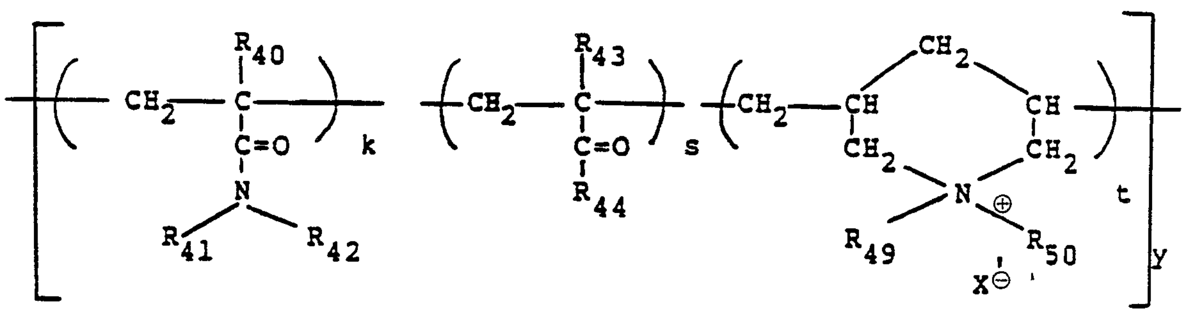

wherein $R_{40}$ is hydrogen or methyl; $R_{41}$ and $R_{42}$ are each selected from hydrogen, methyl and ethyl; $R_{43}$ is hydrogen or methyl; $R_{44}$ is —$OR_{45}$ or —$R_9SO_3X$, wherein $R_{45}$ is hydrogen, an alkali metal, an ammonium group or an organoammonium group of the formula $(R_{37})(R_{38})(R_{39})NH^+$ wherein $R_{37}$, $R_{38}$ and $R_{39}$ and $R_{49}$

and $R_{50}$ are each selected from hydrogen, alkyl having from 1 to 18 carbon atoms, aryl, hydroxyalkyl having from 1 to 3 carbon atoms or mixtures thereof; $R_9$ is a divalent hydrocarbon having 1 to 13 carbon atoms, X is a monovalent cation; X' is halogen or $R_{48}SO_4$, wherein $R_{48}$ is alkyl having from 1 to 4 carbon atoms; k is from about 20 to about 98.9 mole percent; s and t are each from about 1 to about 10 mole percent and wherein t and s are the same; and y is a large positive integer to provide a polymer having a molecular weight greater than 100,000.

**Patentansprüche**

1. Verfahren zur Herstellung von Wasser-in-Öl Emulsionen eines Polymers aus mindestens einem ethylenisch ungesättigten, wasserlöslichen Monomer, das die Stufen einer

(a) Bildung einer Wasser-in-Öl-Emulsion mindestens eines ethylenisch ungesättigten, wasserlöslichen Monomers,

(b) Bildung einer geringen Menge Polymer dieses Monomers in der Emulsion zur Schaffung einer scherbeständigen Emulsion und anschließend

(c) Beendigung der Polymerisation dieses Monomers in der Emulsion

umfaßt, dadurch gekennzeichnet, daß ein einziger Polymerisationsinitiator zur Bildung der scherbeständigen Emulsion und zum Vollenden der Polymerisation verwendet wird.

2. Verfahren nach Anspruch 1, worin die Monomeremulsion Wasser, mindestens ein wasserlösliches, ethylenisch ungesättigtes Monomer, eine hydrophobe Flüssigkeit und ein öllösliches, oberflächenaktives Mittel umfaßt.

3. Verfahren nach einem oder beiden der Ansprüche 1 bis 2, worin die Emulsion mindestens ein hydrophobes Monomer enthält.

4. Verfahren nach einem oder mehreren der Ansprüche 1 bis 3, worin die scherbeständige Emulsion bei einer Temperatur unter der Temperatur, bei welcher die Polymerisation vollendet wird, erhalten wird.

5. Verfahren nach Anspruch 4, das weiterhin ein Abkühlen der Emulsion während der Polymerisation durch kontinuierliches Abziehen mindestens eines Teiles der Emulsion und Zirkulieren dieses Anteils durch eine äußere Leitung des Wärmeaustauschers zurück Polymerisation umfaßt.

6. Verfahren nach einem oder mehreren der Ansprüche 1 bis 5, worin das Monomer mindestens ein Monomer ist, ausgewählt aus der Gruppe bestehend aus

(1) Acryl- und Methacrylsäure, Derivaten und Salzen derselben der Formel

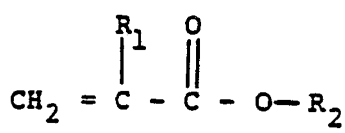

worin $R_1$ ein Wasserstoffatom oder eine Methylgruppe ist; $R_2$ ein Wasserstoffatom, ein Alkalimetallatom, eine Ammoniumgruppe, eine Organoammoniumgruppe der Formel $(R_3)(R_4)(R_5)NH^+$ (worin $R_3$, $R_4$ und $R_5$ unabhängig ausgewählt sind von einem Wasserstoffatom, einer Alkylgruppe mit 1 bis 18 Kohlenstoffatomen, einer Arylgruppe oder Hydroxyalkylgruppe oder Mischungen derselben) ist,

(2) Acrylamid und Methacrylamid und Derivaten derselben mit der Formel

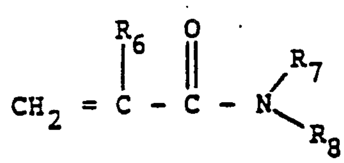

worin $R_6$ ein Wasserstoffatom oder eine Methylgruppe ist; $R_7$ ein Wasserstoffatom, eine Methyl- oder Ethylgruppe ist; $R_8$ ein Wasserstoffatom, eine Methylgruppe, Ethylgruppe oder $—R_9—SO_3X$ ist, worin $R_9$ eine zweiwertige Kohlenwasserstoffgruppe mit 1 bis 13 Kohlenstoffatomen und X ein einwertiges Kation ist;

(3) Vinylsulfonaten,

(4) olefinischen Dicarbonsäuren und

(5) weniger als 20 Mol-%, bezogen auf die gesamten Monomeren, von Vinylmonomeren der Formel

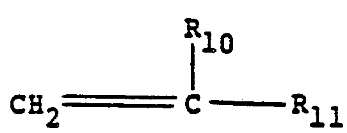

worin $R_{10}$ ein Wasserstoffatom oder eine Methylgruppe ist, und $R_{11}$

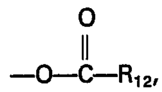

ein Halogenatom $—O—R_{13}$,

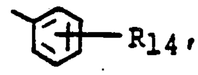 oder 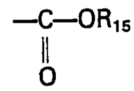

ist, worin $R_{15}$ eine Alkyl-, Aryl- oder Aralkylgruppe mit 1 bis 18 Kohlenstoffatomen ist, $R_{12}$ eine Alkylgruppe mit 1 bis 8 Kohlenstoffatom ist, $R_{13}$ eine Alkylgruppe mit 1 bis 6 Kohlenstoffatomen ist, $R_{14}$ ein Wasserstoffatom, eine Methylgruppe, Ethylgruppe oder ein Halogenatom ist.

7. Verfahren nach Anspruch 1 bis 6, worin die Wasser-in-Öl-Emulsion mindestens ein hydrophobes Monomer mit einer Wasserlöslichkeit von weniger als etwa 5 Gew.-% enthält, das z.B. aus der aus Vinylestern, Alkylacrylaten, Alkylmethacrylaten, Vinylethern, Acrylnitril, Styrol, N-Vinylcarbazol und Vinylhalogeniden bestehenden Gruppe ausgewählt wurde.

8. Verfahren nach einem oder mehreren der Ansprüche 1 bis 7, worin das wasserlösliche Monomer ausgewählt ist aus der aus Acryl- und Methacrylsäure, Derivaten und Salzen derselben, Acrylamid, Methacrylamid und Acrylamid- und Methacrylamidmonomeren der Formel

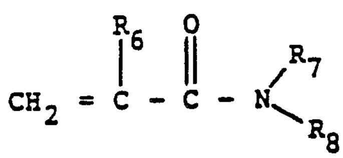

bestehenden Gruppe, worin $R_6$ ein Wasserstoffatom oder eine Methylgruppe ist, $R_7$ ein Wasserstoffatom oder eine Alkylgruppe mit 1 bis 2 Kohlenstoffatomen ist, $R_8$ ein Wasserstoffatom, eine Alkylgruppe mit 1 bis 2 Kohlenstoffatomen oder $—R_9—SO_3X$ ist, worin $R_9$ eine zweiwertige Kohlenwasserstoffgruppe mit 1 bis 13 Kohlenstoffatomen ist und X ein einwertiges Kation ist.

9. Verfahren nach einem oder mehreren der Ansprüche 2 bis 8, worin die hydrophobe Flüssigkeit ausgewählt ist aus der aus Benzol, Xylol, Toluol, Mineralölen, Kerosinen, Petroleum und Mischungen derselben bestehenden Gruppe.

10. Verfahren nach einem oder mehreren der Ansprüche 2 bis 9, worin das öllösliche oberflächenaktive Mittel ein Hydrophil/Lipophil-Gleichgewicht (HLB) von etwa 1 bis etwa 10 hat.

11. Verfahren nach einem oder mehreren der Anbsprüche 1 bis 10, worin das Polymer durch die folgende Formel dargestellt wird

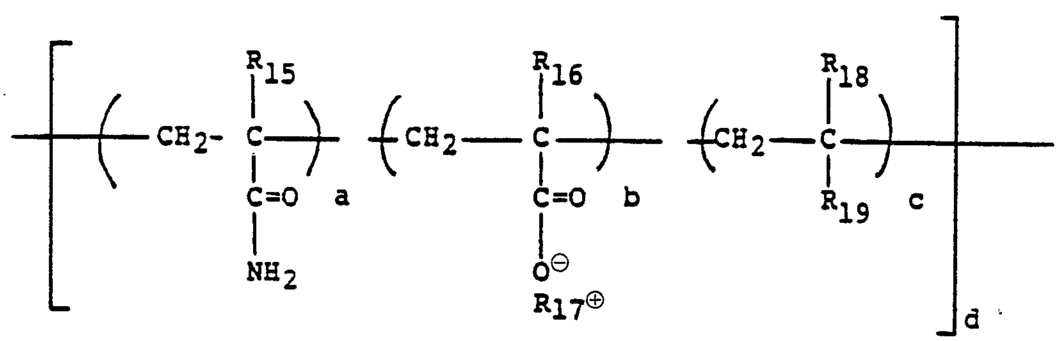

worin $R_{15}$, $R_{16}$ und $R_{18}$ unabhängig jeweils ein Wasserstoffatom oder eine Methylgruppe sind, $R_{17}{}^{\oplus}$ ein Alkalimetallatom oder eine Ammoniumgruppe ist, $R_{19}$ $—OR_{20}$,

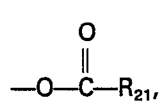

Phenyl, substituiertes Phenyl, —CN,

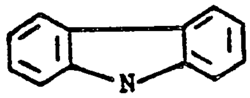

oder

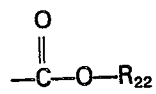

ist, wobei $R_{20}$ eine Alkylgruppe mit bis zu 5 Kohlenstoffatomen ist, $R_{21}$ eine Methyl-, Ethyl- oder Butylgruppe ist und $R_{22}$ eine Alkylgruppe mit bis zu 8 Kohlenstoffatomen ist, a etwa 5 bis etwa 90 Mol-% bedeutet, b etwa 5 bis etwa 90 Mol-% bedeutet, c etwa 0 bis etwa 20 Mol-% bedeutet, mit der Maßgabe, daß a + b + c = 100 Mol-% ist und d eine ganze Zahl von etwa 1000 bis etwa 500 000 ist.

12. Verfahren nach Anspruch 11, worin das Polymer ein Terpolymer der Formel

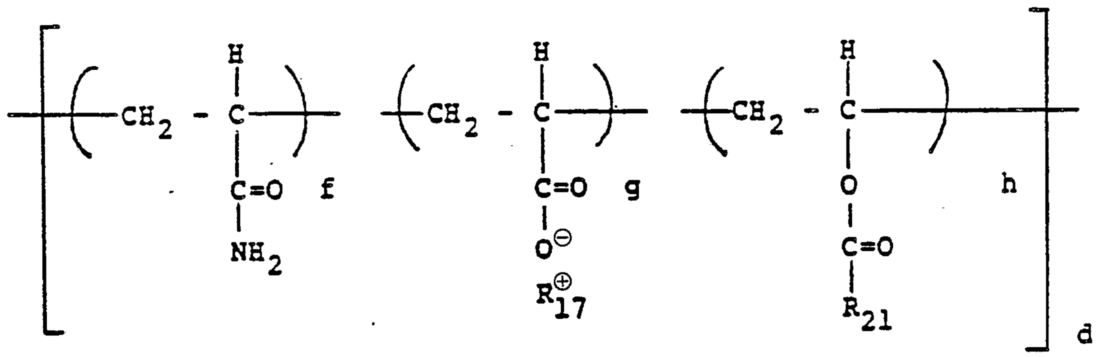

ist, worin $R_{17}^{\oplus}$, $Na^{\oplus}$, $K^{\oplus}$ oder $NH_4^{\oplus}$ ist, $R_{21}$ eine Methyl-, Ethyl-oder Butylgruppe ist, f etwa 30 bis etwa 60 Mol-% bedeutet, g etwa 30 bis etwa 60 Mol-% bedeutet und h etwa 0 bis etwa 20 Mol-% bedeutet, mit der Maßgabe, daß f + g + h = 100 Mol-% ist, und d wie in Anspruch 11 definiert ist.

13. Verfahren nach einem oder mehreren der Ansprüche 1 bis 10, worin das Polymer durch die folgende Formel dargestellt wird:

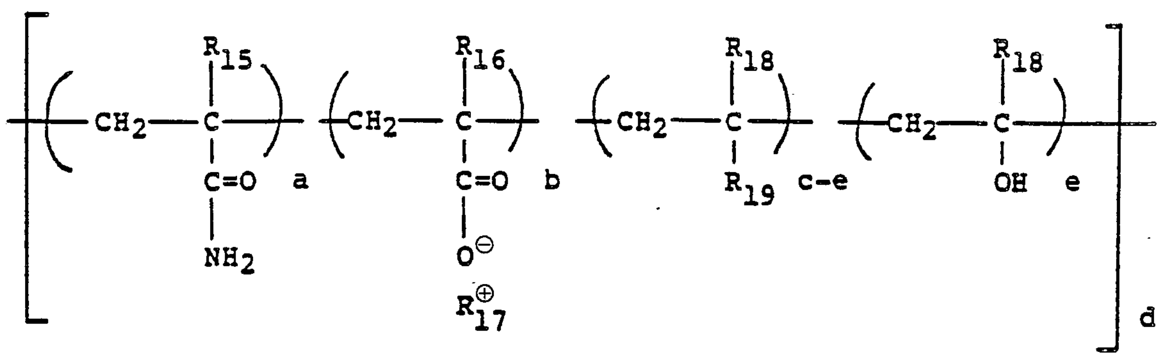

worin $R_{15}$, $R_{16}$, $R_{17}^{\oplus}$, $R_{18}$, $R_{19}$, a, b, c und d wie in Anspruch 11 definiert sind, e von 0 bis weniger als etwa 20 Mol-% bedeutet, mit der Maßgabe, daß a + b + (c-e) + e = 100 Mol-% ist.

14. Verfahren nach Anspruch 13, worin das Polymer durch die Formel

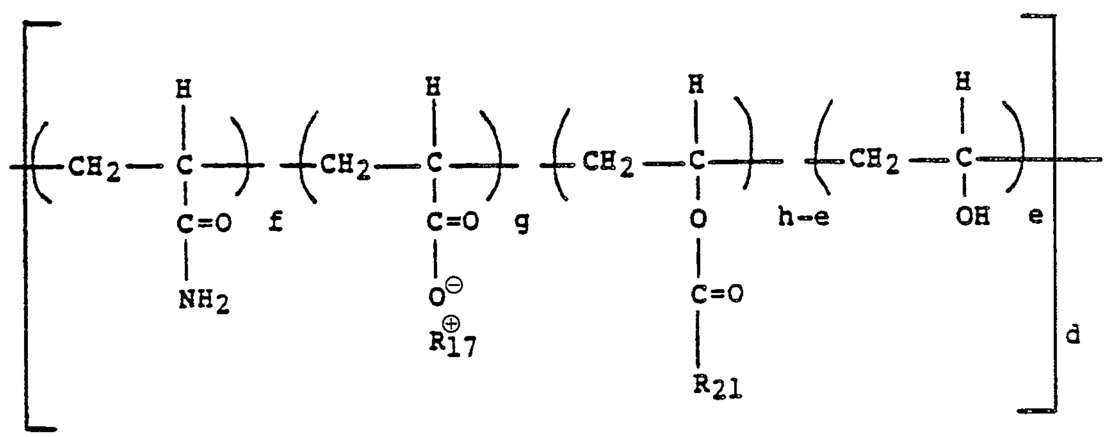

dargestellt wird, worin $R_{17}$, $R_{21}$, f, g und h wie in Anspruch 12 definiert sind, e von 0 bis etwa 20 Mol-% bedeutet, mit der Maßgabe, daß f + g + (h-e) + e = 100 Mol-% ist.

15. Verfahren nach einem oder mehreren der Ansprüche 1 bis 10, worin das Polymer durch die folgende Formel

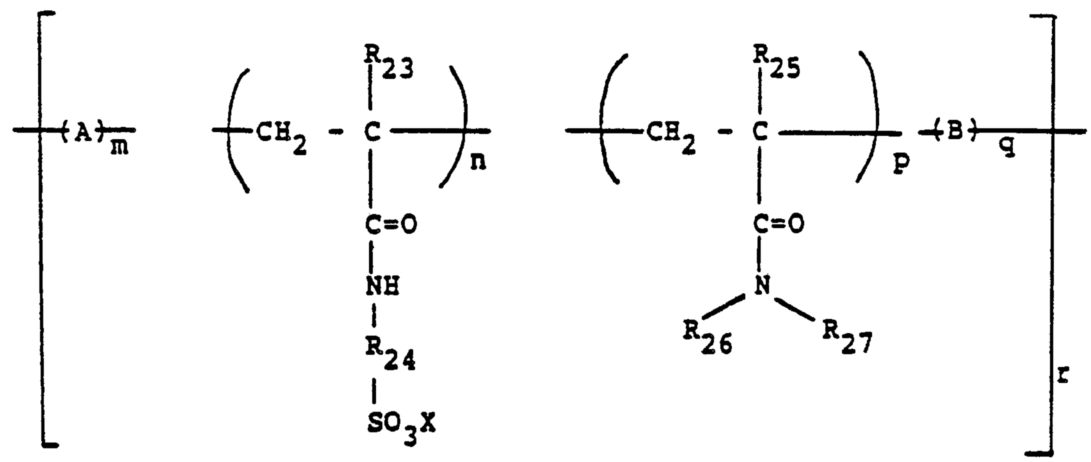

dargestellt wird, worin A eine wiederkehrende Einheit, abgeleitet von einem hydrophoben Vinylmonomer mit einer Wasserlöslichkeit von weniger als etwa 5 Gew.-%, ist, $R_{23}$ und $R_{25}$ jeweils ein Wasserstoffatom oder eine Methylgruppe sind, $R_{26}$ und $R_{27}$ jeweils unabhängig ein Wasserstoffatom, eine Methyl- oder Ethylgruppe sind, $R_{24}$ eine zweiwertige Kohlenwasserstoffgruppe mit 2 bis 13 Kohlenstoffatomen ist, X ein einwertiges Kation ist, B eine wiederkehrende Einheit,

abgeleitet von einer ethylenisch ungesättigten Carbonsäure oder einem Salz derselben, ist, m 0 bis etwa 10 Mol-% bedeutet, n etwa 1 bis etwa 40 Mol-% bedeutet, p etwa 20 bis etwa 98,9 Mol-% bedeutet und q 0 bis etwa 40 Mol-% bedeutet, mit der Maßgabe, daß m + n + p + q = 100 Mol-% ist, und r eine große positive ganze Zahl ist.

16. Verfahren nach Anspruch 15, worin das Polymer ein Terpolymer der Formel

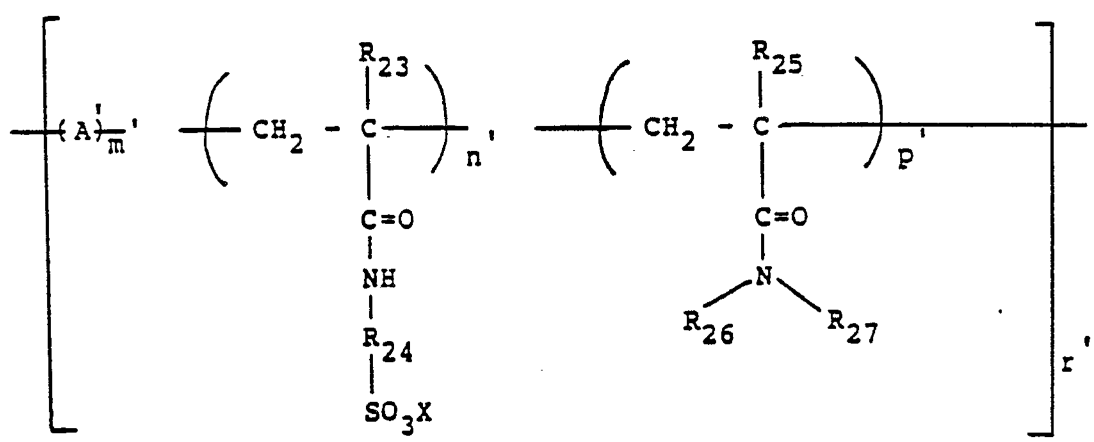

ist, worin A'

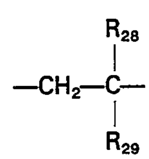

bedeutet, wobei $R_{28}$ —H oder —$CH_3$ ist und $R_{29}$

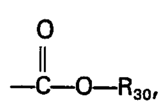

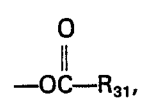

ein Halogenatom, —O—$R_{32}$, —CN oder

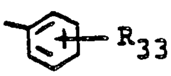

ist, worin $R_{30}$ eine Alkylgruppe mit 1 bis 12 Kohlenstoffatomen ist, $R_{31}$ eine Alkylgruppe mit 1 bis 4 Kohlenstoffatomen ist, $R_{32}$ eine Alkylgruppe mit 1 bis 6 Kohlenstoffatomen ist und $R_{33}$ ein Wasserstoffatom, eine Methyl- oder Ethylgruppe ist, $R_{24}$ eine Alkylengruppe mit 2 bis 8 Kohlenstoffatomen, eine Cycloalkylengruppe mit 6 bis 8 Kohlenstoffatomen oder Phenylen ist, $R_{23}$ und $R_{25}$ jeweils ein Wasserstoffatom oder eine Methylgruppe sind, $R_{26}$ und $R_{27}$ jeweils ein Wasserstoffatom, eine Methyl- oder Ethylgruppe sind, X ein Wasserstoffatom, eine Ammoniumgruppe, eine Organoammoniumgruppe oder ein Alkalimetallatom ist, m' und n' die gleiche Bedeutung haben wie m bzw. n und p' etwa 50 bis 98,9 Mol-% bedeutet, wobei m' + n' + p' = 100 Mol-% ist, und r' eine große positive ganze Zahl ist, so daß das Molekulargewicht des Polymers größer als 500 000 ist.

17. Verfahren nach Anspruch 16, worin das Polymer durch die folgende Formel

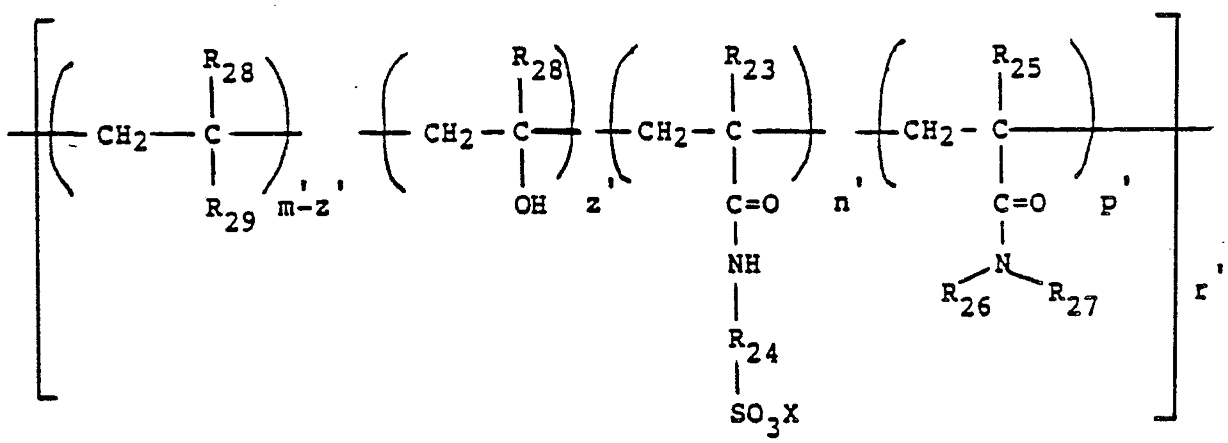

worin $R_{23}$, $R_{24}$, $R_{25}$, + $R_{27}$, $R_{28}$, $R_{29}$, X, m', n', p' und r' wie in Anspruch 16 definiert sind und z' von 0 bis weniger als etwa 10 Mol-% bedeutet und (m'-z') + n' + p' $R_{26}$, z' = 100 Mol-% ist.

18. Verfahren nach Anspruch 16, worin das Terpolymer ein Polymer aus der Polymerisation einer Wasser-in-Öl-Monomer-emulsion umfaßt, die etwa 8 bis etwa 12 Mol-% Natrium-2-acrylamido-2-methylpropan-sulfonatmonomer, etwa 87 bis etwa 91 Mol-% Acrylamidmonomer und etwa 1 bis etwa 5 Mol-% Vinylacetatmonomer enthält.

19. Verfahren nach Anspruch 15, worin das Polymer ein Tetrapolymer der Formel

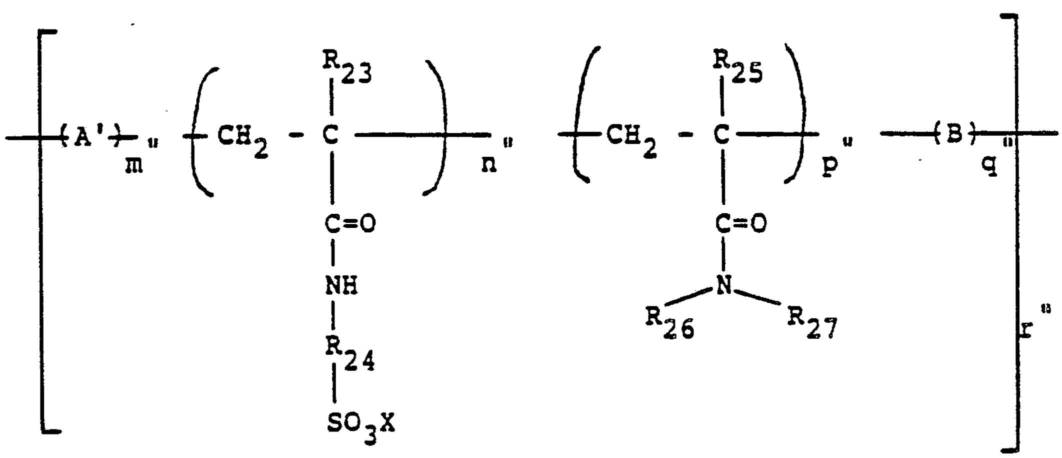

ist, worin A', $R_{23}$, $R_{24}$, $R_{25}$, $R_{26}$ und $R_{27}$ wie in Anspruch 15 definiert sind, m'', n'' und r'' die gleiche Bedeutung haben wie m, n bzw, r,p'' von etwa 20 bis 96.9 Mol-% bedeutet, q'' mehr als 0 und bis zu etwa 40 Mol-% bedeutet, mit der Maßgabe, daß m'' + n'' + p'' + q'' = 100 Mol-% ist und B eine wiederkehrende Einheit, abgeleitet von Acryl- und Methacrylsäure, Maleinsäure bzw. Alkalimetallsalzen derselben, darstellt.

20. Verfahren nach Anspruch 19, worin das Tetrapolymer mindestens teilweise hydrolysiert und durch die folgende Formel

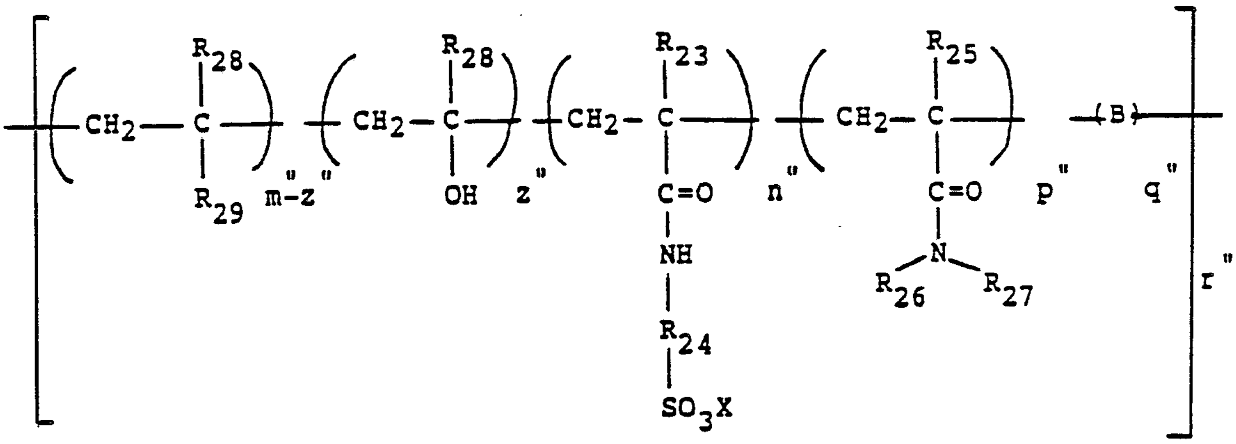

dargestellt ist, worin $R_{23}$, $R_{24}$, $R_{25}$, $R_{26}$, $R_{27}$, $R_{28}$, $R_{29}$, X, B, m'', n'', p'', q'' und r'' wie in Anspruch 19 definiert sind, $R_{28}$, $R_{25}$ und X wie in Anspruch 16 definiert sind und z'' von 0 bis weniger als etwa 10 Mol-% bedeutet, mit der Maßgabe, daß (m''-z'') + n'' + p'' + q'' + z'' = 100 Mol-% ist.

21. Verfahren nach Anspruch 19, worin das Tetrapolymer ein Polymer umfaßt, erhalten bei der Polymerisation einer Wasser-in-Öl-Monomeremulsion, die von etwa 6 bis etwa 10 Mol-% Natrium-2-acrylamido-2-methylpropan-sulfonatmonomer, von etwa 50 bis etwa 70 Mol-% Acrylamidmonomer, von etwa 1 bis etwa 5 Mol-% Vinylacetatmonomer und von etwa 20 bis etwa 40 Mol-% Natriumacrylatmonomer enthält.

22. Verfahren nach einem oder mehreren der Ansprüche 1 bis 10, worin das Polymer durch die folgende Formel

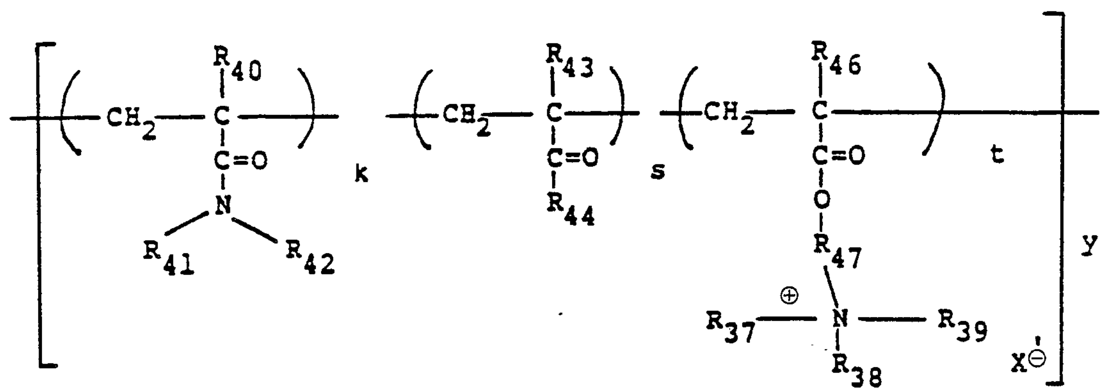

dargestellt wird, worin $R_{40}$ Wasserstoff oder Methyl ist, $R_{41}$ und $R_{42}$ jeweils ausgewählt sind von Wasserstoff, Methyl und Ethyl, $R_{43}$ wasserstoff oder Methyl ist, $R_{44}$ —$OR_{45}$ oder —$R_9SO_3X$ ist, wobei $R_{45}$ Wasserstoff, ein Alkalimetall, eine Ammoniumgruppe oder eine Organoammoniumgruppe der Formel $(R_{37})(R_{38})(R_{39})NH^+$ ist, worin $R_{37}$, $R_{38}$ und $R_{39}$ jeweils ausgewählt sind von Wasserstoff, Alkyl mit 1 bis 18 Kohlenstoffatomen, Aryl, Hydroxylalkyl mit 1 bis 3 Kohlenstoffatomen oder Mischungen derselben, $R_9$ eine zweiwertige Kohlenwasserstoffgruppe mit 1 bis 13 Kohlenstoffatomen ist, X ein einwertiges Kation ist, $R_{46}$ Wasserstoff oder Methyl ist, $R_{47}$ eine zweiwertige Alkylengruppe mit 1 bis 3 Kohlenstoffatomen ist, X' Halogen oder $R_{48}SO_4$ ist, worin $R_{48}$ Alkyl mit 1 bis 4 Kohlenstoffatomen ist, k von etwa 20 bis etwa 98,9 Mol-% bedeutet, s und t jeweils von etwa 1 bis etwa 10 Mol-% bedeuten oder s = 0 ist und t von etwa 1 bis etwa 20 Mol-% bedeutet und y eine große positive ganze Zahl ist, um ein Polymer mit einem Molekulargewicht größer als 100 000 zu ergeben.

23. Verfahren nach einem oder mehreren der Ansprüche 1 bis 10, worin das Polymer durch die folgende Formel

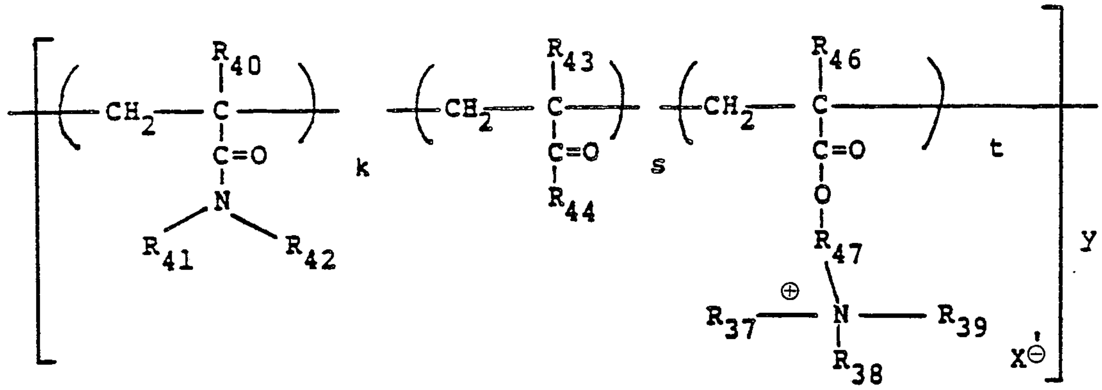

dargestellt wird, worin $R_{40}$ Wasserstoff oder Methyl ist, $R_{41}$ und $R_{42}$ jeweils ausgewählt sind von Wasserstoff, Methyl und Ethyl, $R_{43}$ Wasserstoff oder Methyl ist, $R_{44}$ —$OR_{45}$ oder —$R_9SO_3X$ ist, wobei $R_{45}$ Wasserstoff, ein Alkalimetall, eine Ammoniumgruppe oder eine Organoammoniumgruppe der Formel $(R_{37})(R_{38})(R_{39})NH^+$ ist, worin $R_{37}$, $R_{38}$ und $R_{39}$ jeweils ausgewählt sind von Wasserstoff, Alkyl mit 1 bis 18 Kohlenstoffatomen, Aryl, Hydroxyalkyl mit 1 bis 3 Kohlenstoffatomen oder Mischungen derselben, $R_9$ eine zweiwertige Kohlenwasserstoffgruppe mit 1 bis 13 Kohlenstoffatomen ist, X ein einwertiges Kation ist, $R_{46}$ Wasserstoff oder Methyl ist, $R_{47}$ eine zweiwertige Alkylengruppe mit 1 bis 3 Kohlenstoffatomen ist, X' Halogen oder $R_{48}SO_4$ ist, worin $R_{48}$ Alkyl mit 1 bis 4 Kohlenstoffatomen ist, k von etwa 20 bis etwa 98,9 Mol-% bedeutet, s und t von jeweils etwa 1 bis etwa 10 Mol-% bedeutet und s und t gleich sind und y eine große positive ganze Zahl ist, so daß sich ein Polymer mit einem Molekulargewicht größer als 100 000 ergibt.

24. Verfahren nach einem oder mehreren der Ansprüche 1 bis 10, worin das Polymer durch die Formel

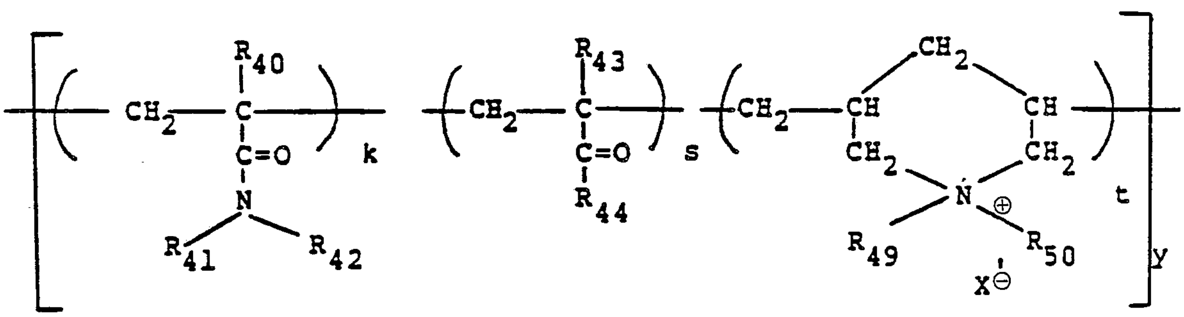

dargestellt wird, worin $R_{40}$ Wasserstoff oder Methyl ist, $R_{41}$ und $R_{42}$ jeweils ausgewählt sind von Wasserstoff, Methyl und Ethyl, $R_{43}$ Wasserstoff oder Methyl ist, $R_{44}$ —$OR_{45}$ oder —$R_9SO_3X$ ist, worin $R_{45}$ Wasserstoff, ein Alkalimetall, eine Ammoniumgruppe oder eine Organoammoniumgruppe der Formel $(R_{37})(R_{38})(R_{39})NH^+$ ist, wobei $R_{37}$, $R_{38}$ und $R_{39}$ und $R_{49}$ und $R_{50}$ jeweils ausgewählt sind von Wasserstoff, Alkyl mit 1 bis 18 Kohlenstoffatomen, Aryl, Hydroxyalkyl mit 1 bis 3 Kohlenstoffatomen oder Mischungen derselben, $R_9$ eine zweiwertige Kohlenwasserstoffgruppe mit 1 bis 13 Kohlenstoffatomen ist, X ein einwertiges Kation ist, X' Halogen oder $R_{48}SO_4$ ist, worin $R_{48}$ Alkyl mit 1 bis 4 Kohlenstoffatomen ist, k von etwa 20 bis etwa 98,9 Mol-% bedeuten, s und t jeweils von etwa 1 bis etwa 10 Mol-% bedeuten oder s = 0 ist und t von etwa 1 bis etwa 20 Mol-% bedeutet und y eine große positive ganze Zahl ist, so daß sich ein Polymer mit einem Molekulargewicht größer als 100 100 ergibt.

25. Verfahren nach einem oder mehreren der Ansprüche 1 bis 10, worin das Polymer durch die Formel

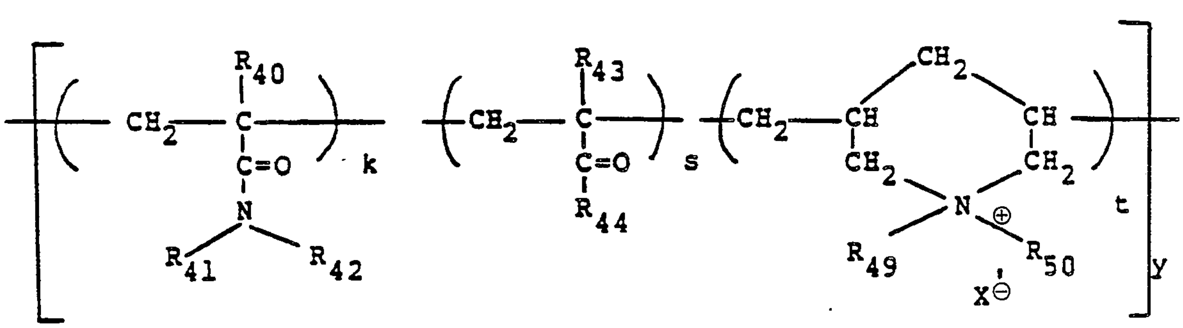

dargestellt wird, worin $R_{40}$ Wasserstoff oder Methyl ist, $R_{41}$ und $R_{42}$ jeweils ausgewählt sind von Wasser-

stoff, Methyl oder Ethyl, $R_{43}$ Wasserstoff oder Methyl ist, $R_{44}$ $—OR_{45}$ oder $—R_9SO_3X$ ist, wobei $R_{45}$ Wasserstoff, ein Alkalimetall, eine Ammoniumgruppe oder eine Organoammoniumgruppe der Formel $(R_{37})(R_{38})(R_{39})NH^+$ ist, wobei $R_{37}$, $R_{38}$ und $R_{39}$ und $R_{49}$ und $R_{50}$ jeweils ausgewählt sind aus Wasserstoff, Alkyl mit 1 bis 18 Kohlenstoffatomen, Aryl, Hydroxyalkyl mit 1 bis 3 Kohlenstoffatomen oder Mischungen derselben, $R_9$ ein zweiwertiger Kohlenwasserstoffrest mit 1 bis 13 Kohlenstoffatomen ist, X ein einwertiges Kation ist, X' Halogen oder $R_{48}SO_4$ ist, worin $R_{48}$ Alkyl mit 1 bis 4 Kohlenstoffatomen ist, k von etwa 20 bis etwa 98,9 Mol-% bedeutet, s und t jeweils von etwa 1 bis etwa 10 Mol-% bedeuten und t und s gleich sind und y eine große positive ganze Zahl ist, so daß sich ein Polymer mit einem Molekulargewicht größer als 100 000 ergibt.

**Revendications**

1. Procédé de production d'émulsions eau-dans-huile d'un polymère dérivé d'au moins un monomère hydrosoluble à non-saturation éthylénique, qui comprend les étapes consistant

(a) à former une émulsion eau-dans-huile d'au moins un monomère hydrosoluble à non-saturation éthylénique;

(b) à former une petite quantité de polymère dudit monomère dans ladite émulsion pour produire une émulsion stable au cisaillement, puis

(c) à accomplir la polymérisation dudit monomère dans ladite émulsion,

caractérisé en ce qu'un unique initiateur de polymérisation est utilisé pour former ladite émulsion stable au cisaillement et pour accomplir ladite polymérisation.

2. Procédé suivant la revendication 1, dans lequel l'émulsion de monomère comprend de l'eau, au moins un monomère hydrosoluble à non-saturation éthylénique, un liquide hydrophobe et un surfactant soluble dans l'huile.

3. Procédé suivant l'une des revendications 1—2 ou les deux, dans lequel l'émulsion contient aussi au moins un monomère hydrophobe.

4. Procédé suivant une ou plusieurs des revendications 1 à 3, dans lequel l'émulsion stable au cisaillement est obtenue à une température inférieure à la température à laquelle la polymérisation est accomplie.

5. Procédé suivant la revendication 4, qui consiste en outre à refroidir l'émulsion pendant la polymérisation par soutirage continu d'au moins une portion de cette émulsion et circulation de cette portion dans une boucle externe d'échangeur de chaleur avec retour dans la zone de polymérisation.

6. Procédé suivant une ou plusieurs des revendications 1 à 5, dans lequel le monomère est constitué d'au moins un monomère choisi dans le groupe comprenant (1) l'acide acrylique et l'acide méthacrylique, leurs dérivés et leurs sels de formule

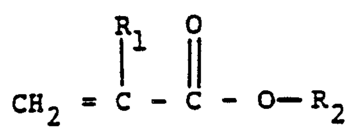

dans laquelle $R_1$ est un atome d'hydrogène ou un groupe méthyle; $R_2$ est un atome d'hydrogène, un atome de métal alcalin, un groupe ammonium, un groupe organo-ammonium de formule: $(R_3)(R_4)(R_5)\ NH^+$ (où $R_3$, $R_4$ et $R_5$ sont choisis indépendamment entre un atome d'hydrogène, un groupe alkyle ayant 1 à 18 atomes de carbone), un groupe aryle ou un groupe hydroxyalkyle ou leurs mélanges; (2) l'acrylamide et le méthacrylamide et leurs dérivés de formule

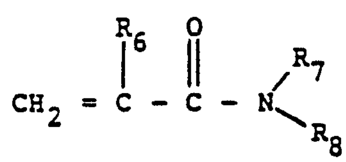

dans laquelle $R_6$ est un atome d'hydrogène ou un groupe méthyle; $R_7$ est un atome d'hydrogène, un groupe méthyle ou un groupe éthyle; $R_8$ est un atome d'hydrogène, un groupe méthyle, un groupe éthyle ou un groupe $—R_9—SO_3X$ dans lequel $R_9$ est un groupe hydrocarboné divalent ayant 1 à 13 atomes de carbone et X est un cation monovalent; (3) des vinylsulfonates; (4) des acides dicarboxyliques oléfiniques; et (5) moins de 20 moles pour-cent, sur la base des monomères totaux, de monomères vinyliques de formule

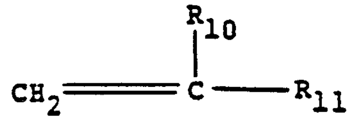

dans laquelle $R_{10}$ est un atome d'hydrogène ou un groupe méthyle et $R_{11}$ est un groupe

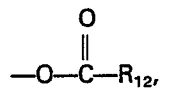

un atome d'halogène, un groupe $-O-R_{13}$, un groupe

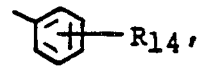

ou un groupe

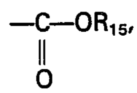

dans lequel $R_{15}$ est un groupe alkyle, un groupe aryle ou un groupe aralkyle ayant 1 à 18 atomes de carbone, $R_{12}$ est un groupe alkyle ayant 1 à 8 atomes de carbone, $R_{13}$ est un groupe alkyle ayant 1 à 6 atomes de carbone, $R_{14}$ est un atome d'hydrogène, un groupe méthyle, un groupe éthyle ou un atome d'halogène.

7. Procédé suivant les revendications 1 à 6, dans lequel l'émulsion eau-dans-huile contient au moins un monomère hydrophobe ayant une solubilité dans l'eau de moins d'environ 5% en poids, choisi par exemple dans le groupe comprenant des esters de vinyle, des acrylates d'alkyle, des méthacrylates d'alkyle, des éthers de vinyle, l'acrylonitrile, le styrène, le N-vinylcarbazole et des halogénures de vinyle.

8. Procédé suivant une ou plusieurs des revendications 1 à 7, dans lequel le monomère hydrosoluble est choisi dans le groupe comprenant l'acide acrylique et l'acide méthacrylique, leurs dérivés et leurs sels; l'acrylamide; le méthacrylamide; et des monomères acrylamido et méthacrylamido de formule

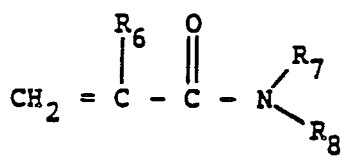

dans laquelle $R_6$ est un atome d'hydrogène ou un groupe méthyle, $R_7$ est un atome d'hydrogène ou un groupe alkyle ayant 1 ou 2 atomes de carbone, $R_8$ est un atome d'hydrogène, un groupe alkyle ayant 1 ou 2 atomes de carbone ou un groupe $-R_9-SO_3X$ dans lequel $R_9$ est un groupe hydrocarboné divalent ayant 1 à 13 atomes de carbone et X est un cation monovalent.

9. Procédé suivant une ou plusieurs des revendications 2 à 8, dans lequel le liquide hydrophone est choisi dans le groupe comprenant le benzène, le xylène, le toluène, des huiles minérales, des kérosènes, pe pétrole et leurs mélanges.

10. Procédé suivant une ou plusieurs des revendications 2 à 9, dans lequel le surfactant soluble dans l'huile a un équilibre hydrophile-lipophile (EHL) d'environ 1 à environ 10.

11. Procédé suivant une ou plusieurs des revendications 1 à 10, dans lequel le polymère est représenté par la formule suivante:

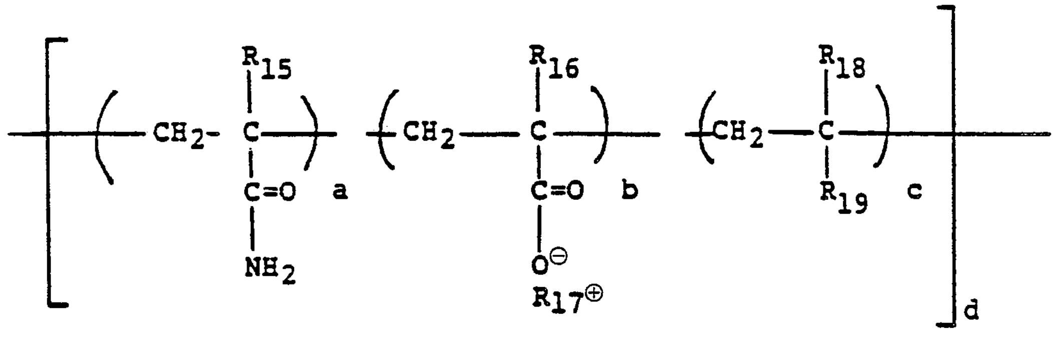

dans laquelle $R_{15}$, $R_{16}$ et $R_{18}$ représentent chacun indépendamment un atome d'hydrogène ou un groupe méthyle; $R_{17}^+$ est un atome de métal alcalin ou un groupe ammonium, $R_{19}$ est un groupe $-OR_{20}$,

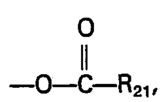 phényle, phényle substitué, —CN,

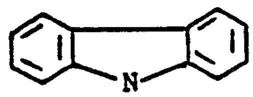 ; ou 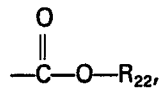

où $R_{20}$ est un groupe alkyle ayant jusqu'à 5 atomes de carbone, $R_{21}$ est un groupe méthyle, éthyle ou butyle et $R_{22}$ est un groupe alkyle ayant jusqu'à 8 atomes de carbone; a a une valeur d'environ 5 à environ 90 moles pour-cent; b a une valeur d'environ 5 à environ 90 moles pour-cent, c a une valeur de 0 à environ 20 moles pour-cent, sous réserve que la somme a + b + c soit égale à 100 moles pour-cent; et d est un nombre entier d'environ 1000 à environ 500 000.

12. Procédé suivant la revendication 11, dans lequel le polymère est un terpolymère représenté par la formule

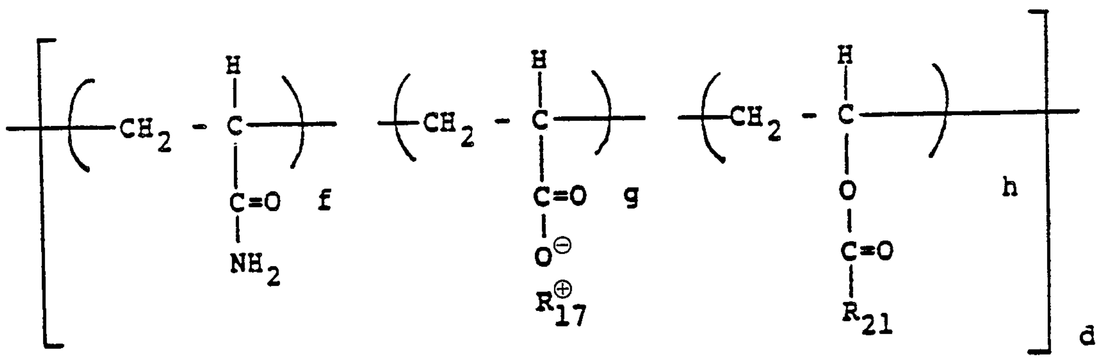

dans laquelle $R_{17}^{+}$ représente $Na^{+}$ ou $K^{+}$ ou $NH_4^{+}$; $R_{21}$ est un groupe méthyle, éthyle ou butyle; f a une valeur d'environ 30 à environ 60 moles pour-cent, g a une valeur d'environ 30 à environ 60 moles pour-cent et h va de 0 à environ 20 moles pour-cent, sous réserve que la somme f + g + h soit égale à 100 moles pour-cent, et d est tel que défini dans la revendication 11.

13. Procédé suivant une ou plusieurs des revendications 1 à 10, dans lequel le polymère est représenté par la formule suivante:

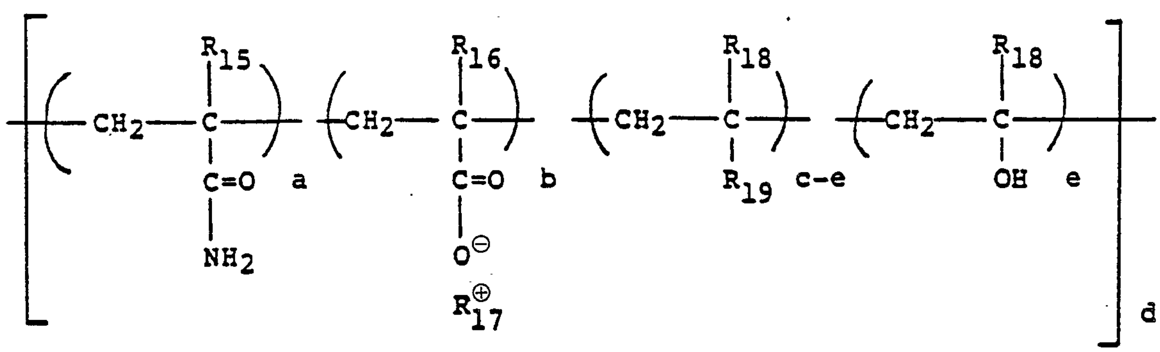

dans laquelle $R_{15}$, $R_{16}$, $R_{17}^{+}$, $R_{18}$, $R_{19}$, a, b, c et d sont tels que définis dans la revendication 11; e a une valeur de 0 à moins d'environ 20 moles pour-cent, sous réserve que la somme a + b + (c-e) + e soit égale à 100 moles pour-cent.

14. Procédé suivant la revendication 13, dans lequel le polymère est représenté par la formule:

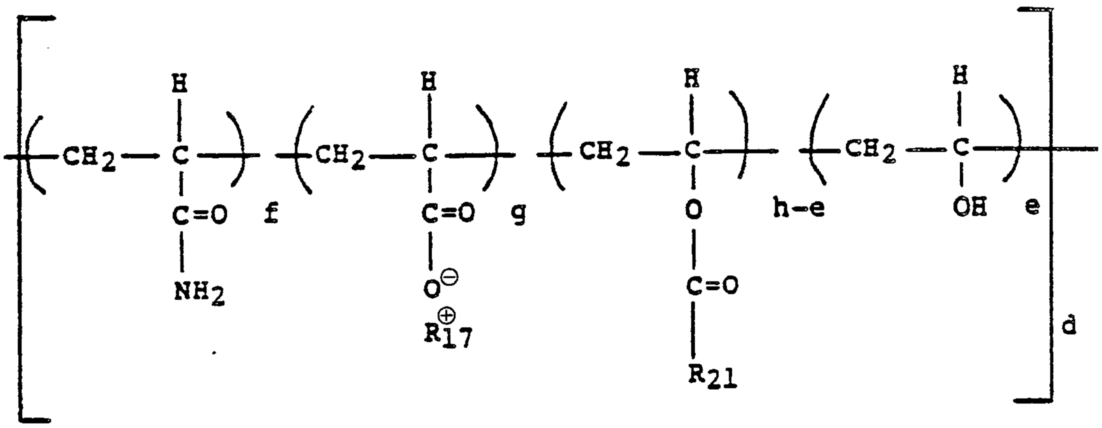

dans laquelle $R_{17}$, $R_{21}$, f, g et h sont tels que définis dans la revendication 12; e a une valeur de 0 à environ 20 moles pour-cent, sous réserve que la somme f + g + (h-e) + e soit égale à 100 moles pour-cent.

15. Procédé suivant une ou plusieurs des revendications 1 à 10, dans lequel le polymère est représente par la formule

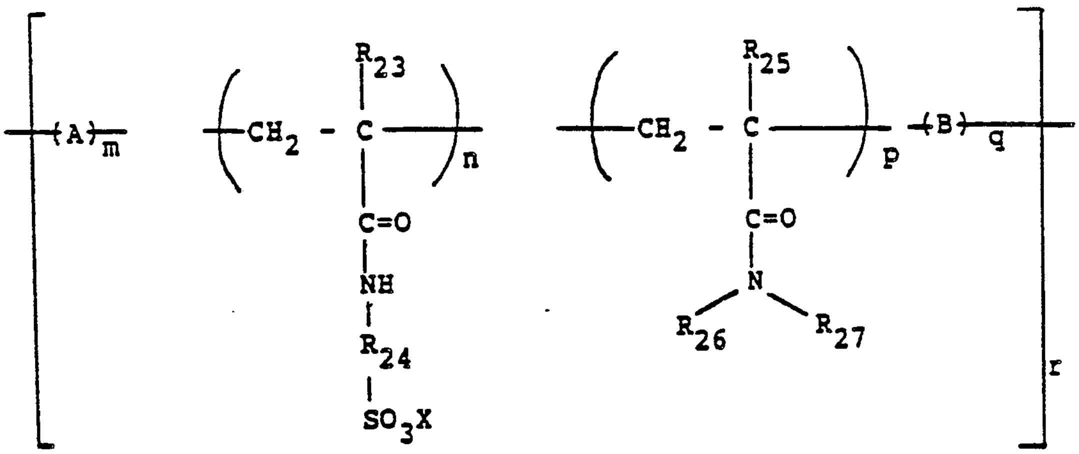

dans laquelle A représente un motif répété dérivé d'un monomère vinylique hydrophobe ayant une hydrosolubilité inférieure à environ 5% en poids; $R_{23}$ et $R_{25}$ sont chacun un atome d'hydrogène ou un groupe méthyle; $R_{26}$ et $R_{27}$ représentent chacun indépendamment un atome d'hydrogène, un groupe méthyle ou un groupe éthyle; $R_{24}$ est un groupe hydrocarboné divalent ayant 2 à 13 atomes de carbone; X représente un cation monovalent; B représente un motif répété dérivé d'un acide carboxylique à non-saturation éthylénique ou d'un sel de cet acide; m a une valeur de 0 à environ 10 moles pour-cent, n a une valeur d'environ 1 à environ 40 moles pour-cent, p a une valeur d'environ 20 à environ 98,9 moles pour-cent et q a une valeur de 0 à environ 40 moles pour-cent, sous réserve que la somme m + n + p + q soit égale à 100 moles pour-cent; et r est un grand nombre entier positif.

16. Procédé suivant la revendication 15, dans lequel le polymère est un terpolymère représenté par la formule:

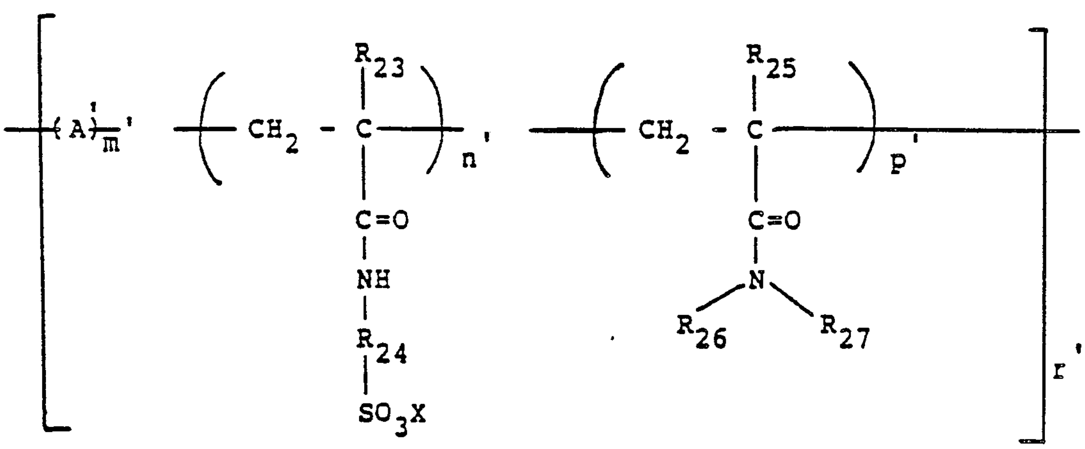

dans laquelle A′ représente

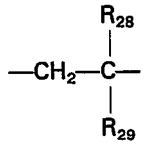

où $R_{28}$ représente —H ou —$CH_3$ et $R_{29}$ est un groupe

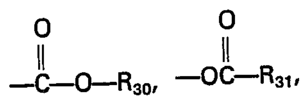

un atome d'halogène, un groupe —O—$R_{32}$, —CN ou

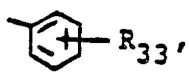

où $R_{30}$ est un groupe alkyle ayant 1 à 12 atomes de carbone, $R_{31}$ est un groupe alkyle ayant 1 à 4 atomes de carbone, $R_{32}$ est un groupe alkyle ayant 1 à 6 atomes de carbone et $R_{33}$ est un atome d'hydrogène, un groupe méthyle ou un groupe éthyle; $R_{24}$ est un groupe alkylène ayant 2 à 8 atomes de carbone, un groupe cycloalkylène ayant 6 à 8 atomes de carbone ou le groupe phénylène; $R_{23}$ et $R_{25}$ représentent chacun un atome d'hydrogène ou un groupe méthyle; $R_{26}$ et $R_{27}$ représentent chacun un atome d'hydrogène, un groupe méthyle ou un groupe éthyle; X est un atome d'hydrogène, un groupe ammonium, un groupe organo-ammonium ou un atome de métal alcalin, m′ et n′ sont identiques à m et respectivement n, et p′ a une valeur d'environ 50 à 98,9 moles pour-cent, la somme m′ + n′ + p′ est égale à 100 moles pour-cent; et r′ est un grand nombre entier positif choisi de manière que le poids moléculaire du polymère soit supérieur à 500 000.

17. Procédé suivant la revendication 16, dans lequel le polymère est représenté par la formule suivante:

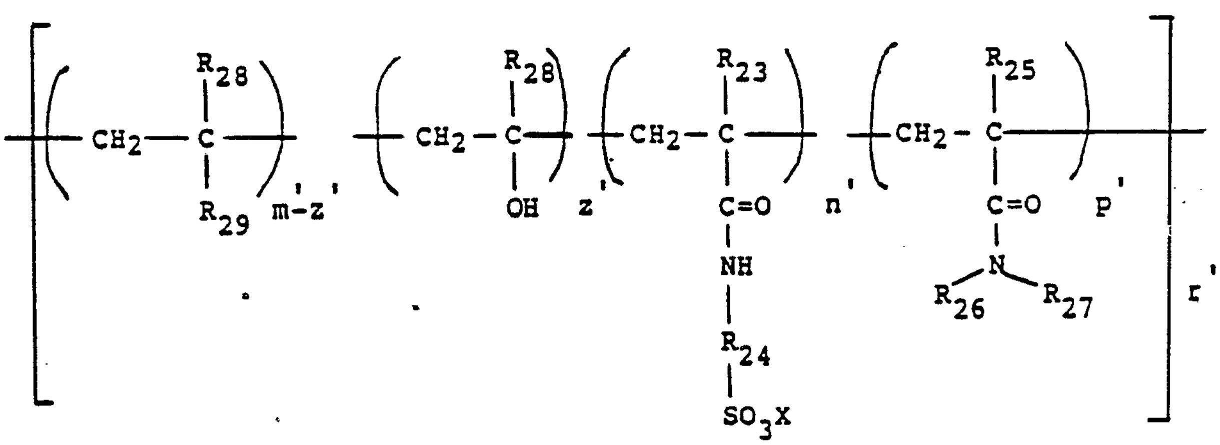

dans laquelle $R_{23}$, $R_{24}$, $R_{25}$, $R_{26}$, $R_{27}$, $R_{28}$, $R_{29}$, X, m′, n′, p′ et r′ ont les définitions données dans la revendication 16 et z′ a une valeur de 0 à moins d'environ 10 moles pour-cent et la somme (m′-z′) + n′ + p′ + z′ est égale à 100 moles pour-cent.

18. Procédé suivant la revendication 16, dans lequel le terpolymère comprend un polymère qui résulte de la polymérisation d'une émulsion de monomère eau-dans-huile contenant environ 8 à environ 12 moles pour-cent de 2-acrylamido-2-méthylpropane-sulfonate de sodium monomère, environ 87 à environ 91 moles pour-cent d'acrylamide monomère et environ 1 à environ 5 moles pour-cent d'acétate de vinyle monomère.

19. Procédé suivant la revendication 15, dans lequel le polymère est un tétrapolymère représenté par la formule:

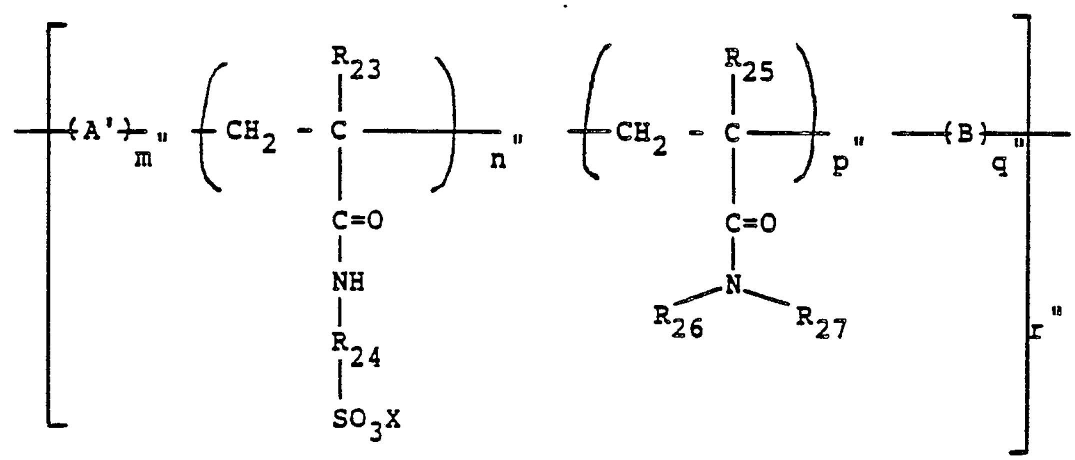

dans laquelle A', $R_{23}$, $R_{24}$, $R_{25}$, $R_{26}$ et $R_{27}$ ont les définitions données dans la revendication 15; m'', n'' et r'' ont les mêmes définitions que m, n et respectivement r; p'' a une valeur d'environ 20 à 96,9 moles pour-cent; q'' est supérieur à 0 et va jusqu'à environ 40 moles pour-cent, sous réserve que la somme m'' + n'' + p'' + q'' soit égale à 100 moles pour-cent; et B représente un motif répété dérivé d'un membre du groupe comprenant l'acide acrylique, l'acide méthacrylique, l'acide maléique et leurs sels de métaux alcalins.

20. Procédé suivant la revendication 19, dans lequel le tétrapolymère est au moins partiellement hydrolysé et est représenté par la formule suivante:

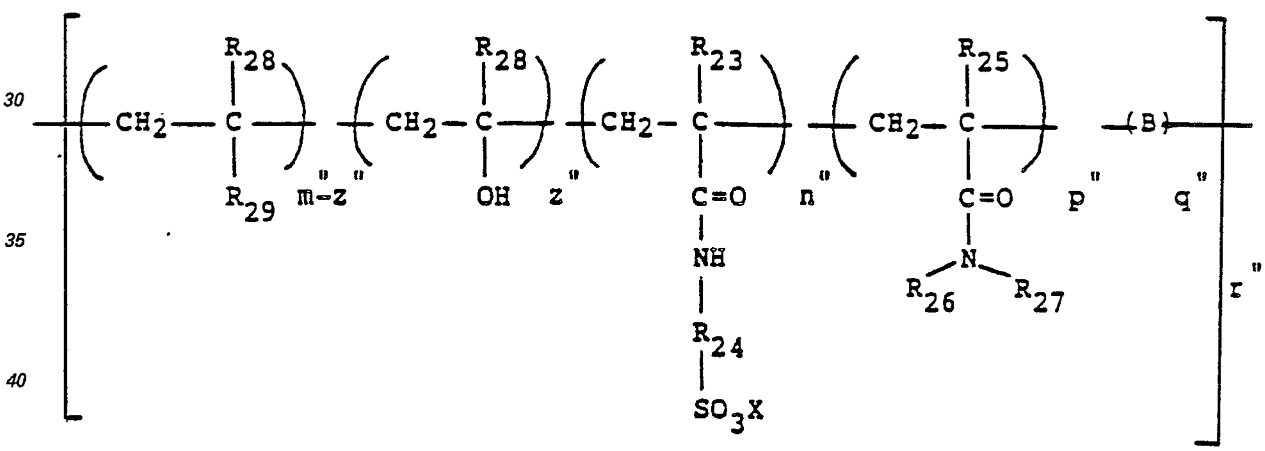

dans laquelle $R_{23}$, $R_{24}$, $R_{25}$, $R_{26}$, $R_{27}$, $R_{28}$, $R_{29}$, X, B, m'', n'', p'', q'' et r'' sont tels que définis dans la revendication 19; $R_{28}$, $R_{25}$ et X sont tels que définis danns la revendication 16; et z'' a une valeur de 0 à moins d'environ 10 moles pour-cent, sous réserve que la somme (m''-z'') + n'' + p'' + q'' + z'' soit égale à 100 moles pour-cent.

21. Procédé suivant la revendication 19, dans lequel le tétrapolymère comprend un polymère qui résulte de la polymérisation d'une émulsion de monomère eau-dans-huile contenant environ 6 à environ 10 moles pour-cent de 2-acrylamido-2-méthylpropane-sulfonate de sodium monomère, environ 50 à environ 70 moles pour-cent d'acrylamide monomère, environ 1 à environ 5 moles pour-cent d'acétate de vinyle monomère et environ 20 à environ 40 moles pour-cent d'acrylate de sodium monomère.

22. Procédé suivant une ou plusieurs des revendications 1 à 10, dans lequel le polymère est représenté par la formule suivante:

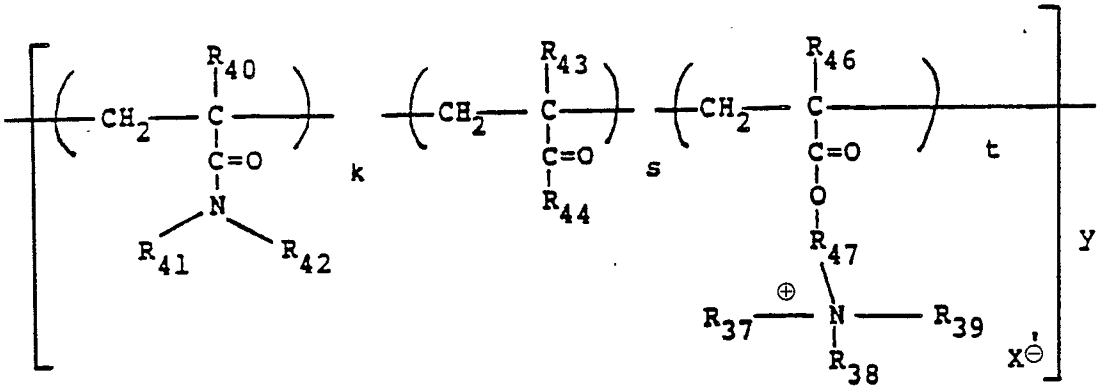

dans laquelle $R_{40}$ est l'hydrogène ou le groupe méthyle; $R_{41}$ et $R_{42}$ sont tous deux choisis entre l'hydrogène, le groupe méthyle et le groupe éthyle; $R_{43}$ est l'hydrogène ou le groupe méthyle; $R_{44}$ est un groupe —$OR_{45}$ ou —$R_9SO_3X$, où $R_{45}$ est l'hydrogène, un métal alcalin, un groupe ammonium ou un groupe organo-ammonium de formule $(R_{37})(R_{38})(R_{39})$ $NH^+$ dans laquelle $R_{37}$, $R_{38}$ et $R_{39}$ sont choisis chacun entre l'hydrogène, des groupes alkyle ayant 1 à 18 atomes de carbone, des groupes aryle, hydroxyalkyle ayant 1 à 3 atomes de carbone ou leurs mélanges; $R_9$ est un hydrocarbure divalent ayant 1 à 13 atomes de carbone, X est un cation monovalent; $R_{46}$ est l'hydrogène ou le groupe méthyle; $R_{47}$ est un groupe alkylène divalent ayant 1 à 3 atomes de carbone; X' est un halogène ou un groupe $R_{48}SO_4$ dans lequel $R_{48}$ est un groupe alkyle ayant 1 à 4 atomes de carbone; k a une valeur d'environ 20 à environ 98,9 moles pour-cent; s et t ont chacun une valeur d'environ 1 à environ 10 moles pour-cent ou bien, à titre de variante, s est égal à 0 et t a une valeur d'environ 1 à environ 20 moles pour-cent; et y est un grand nombre entier positif choisi de manière à donner un polymère ayant un poids moléculaire supérieur à 100 000.

23. Procédé suivant une ou plusieurs des revendications 1 à 10, dans lequel le polymère est représenté par la formule suivante:

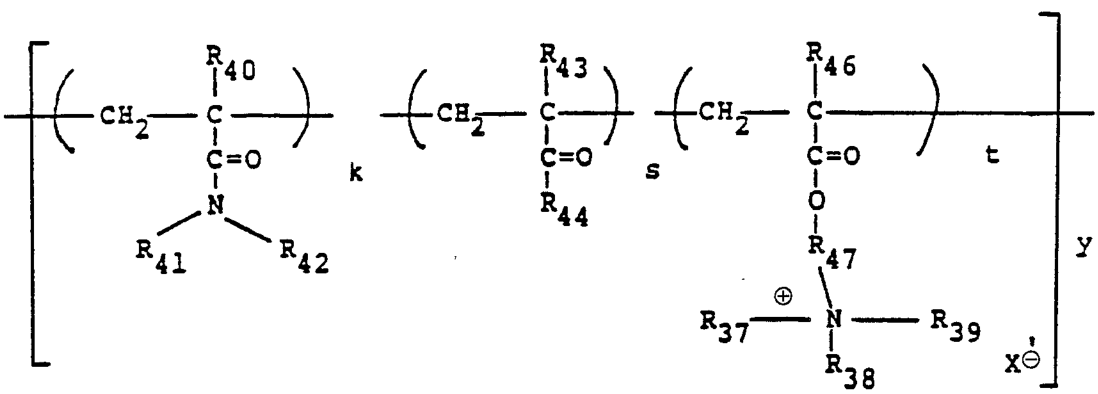

dans laquelle $R_{40}$ est l'hydrogène ou le groupe méthyle; $R_{41}$ et $R_{42}$ sont tous deux choisis entre l'hydrogène, le groupe méthyle et le groupe éthyle; $R_{43}$ est l'hydrogène ou un groupe méthyle; $R_{44}$ est un groupe —$OR_{45}$ ou —$R_9SO_3X$, où $R_{45}$ est l'hydrogène, un métal alcalin, un groupe ammonium ou un groupe organo-ammonium de formule $(R_{37})(R_{38})(R_{39})$ $NH^+$ où $R_{37}$, $R_{38}$ et $R_{39}$ sont choisis chacun entre l'hydrogène, des groupes alkyle ayant 1 à 18 atomes de carbone, aryle, hydroxyalkyle ayant 1 à 3 atomes de carbone ou leurs mélanges; $R_9$ est un hydrocarbure divalent ayant 1 à 13 atomes de carbone, X est un cation monovalent; $R_{46}$ est l'hydrogène ou le groupe méthyle; $R_{47}$ est un groupe alkylène divalent ayant 1 à 3 atomes de carbone; X' est un halogène ou un groupe $R_{48}SO_4$ dans lequel $R_{48}$ est un groupe alkyle ayant 1 à 4 atomes de carbone; k a une valeur d'environ 20 à environ 98,9 moles pour-cent; s et t ont chacun une valeur d'environ 1 à environ 10 moles pour-cent et s et t sont identiques; et y est un grand nombre entier positif choisi de manière à donner un polymère ayant un poids moléculaire supérieur à 100 000.

24. Procédé suivant une ou plusieurs des revendications 1 à 10, dans lequel le polymère est représenté par la formule

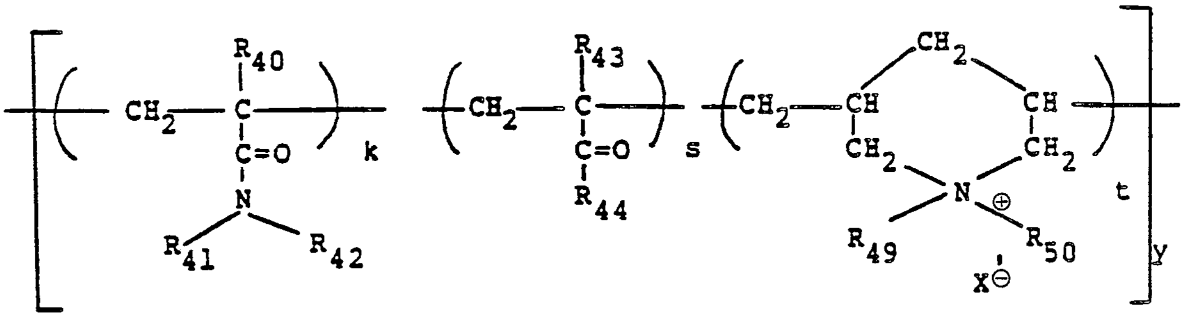

dans laquelle $R_{40}$ est l'hydrogène ou le groupe méthyle; $R_{41}$ et $R_{42}$ sont tous deux choisis entre l'hydrogène, le groupe méthyle et le groupe éthyle; $R_{43}$ est l'hydrogène ou le groupe méthyle; $R_{44}$ est un groupe —$OR_{45}$ ou —$R_9SO_3X$, où $R_{45}$ est l'hydrogéne, un métal alcalin, un groupe ammonium ou un groupe organo-ammonium de formule $(R_{37})(R_{38})(R_{39})$ $NH^+$ où $R_{37}$, $R_{38}$ et $R_{39}$, et $R_{49}$ et $R_{50}$ sont choisis chacun entre l'hydrogène, des groupes alkyle ayant 1 à 18 atomes de carbone, aryle, hydroxyalkyle ayant 1 à 3 atomes de carbone ou leurs mélanges; $R_9$ est un hydrocarbure divalent ayant 1 à 13 atomes de carbone, X est un cation monovalent, X' est un halogène ou un groupe $R_{48}SO_4$ dans lequel $R_{48}$ est un radical alkyle ayant 1 à 4 atomes de carbone; k a une valeur d'environ 20 à environ 98,9 moles pour-cent; s et t ont chacun une valeur d'environ 1 à environ 10 moles pour-cent ou bien, à titre de variante, s est égal à 0 et t a une valeur d'environ 1 à environ 20 moles pour-cent; et y est un grand nombre entier positif choisi de manière à donner un polymère ayant un poids moléculaire supérieur à 100 000.

25. Procédé suivant une ou plusieurs des revendications 1 à 10, dans lequel le polymère est représenté par la formule:

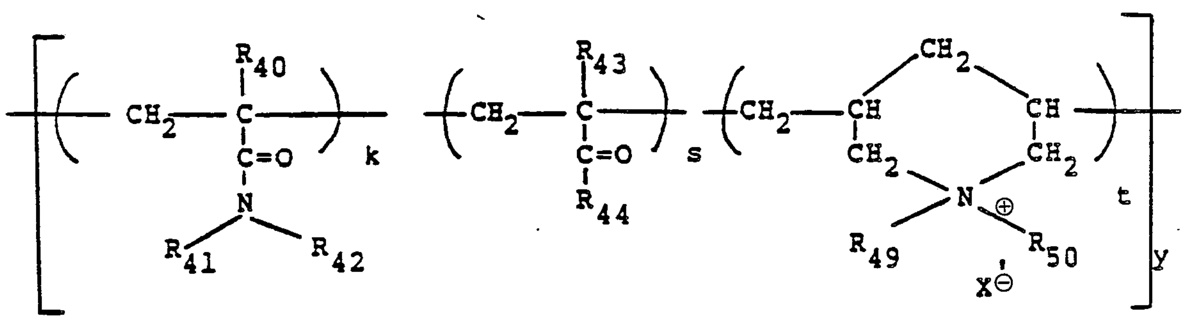

dans laquelle $R_{40}$ est l'hydrogène ou un groupe méthyle; $R_{41}$ et $R_{42}$ sont choisis chacun entre l'hydrogène, le groupe méthyle et le groupe éthyle; $R_{43}$ est l'hydrogène ou le groupe méthyle; $R_{44}$ est un groupe —$OR_{45}$ ou —$R_9SO_3X$, où $R_{45}$ est l'hydrogène, un métal alcalin, un groupe ammonium ou un groupe organo-ammonium de formule $(R_{37})(R_{38})(R_{39})$ $NH^+$ dans laquelle $R_{37}$, $R_{38}$ et $R_{39}$ et $R_{49}$ et $R_{50}$ sont choisis chacun entre l'hydrogène, un groupe alkyle ayant 1 à 18 atomes de carbone, aryle, hydroxyalkyle ayant 1 à 3 atomes de carbone ou leurs mélanges, $R_9$ est un hydrocarbure divalent ayant 1 à 13 atomes de carbone, X est un cation monovalent, X' est un halogène ou un groupe $R_{48}SO_4$ dans lequel $R_{48}$ est un radical alkyle ayant 1 à 4 atomes de carbone; k a une valeur d'environ 20 à environ 98,9 moles pour-cent; s et t ont chacun une valeur d'environ 1 à environ 10 moles pour-cent et t et s sont identiques; et y est un grand nombre entier positif choisi de manière que le polymère ait un poids moléculaire supérieur à 100 000.

Fig. 1.

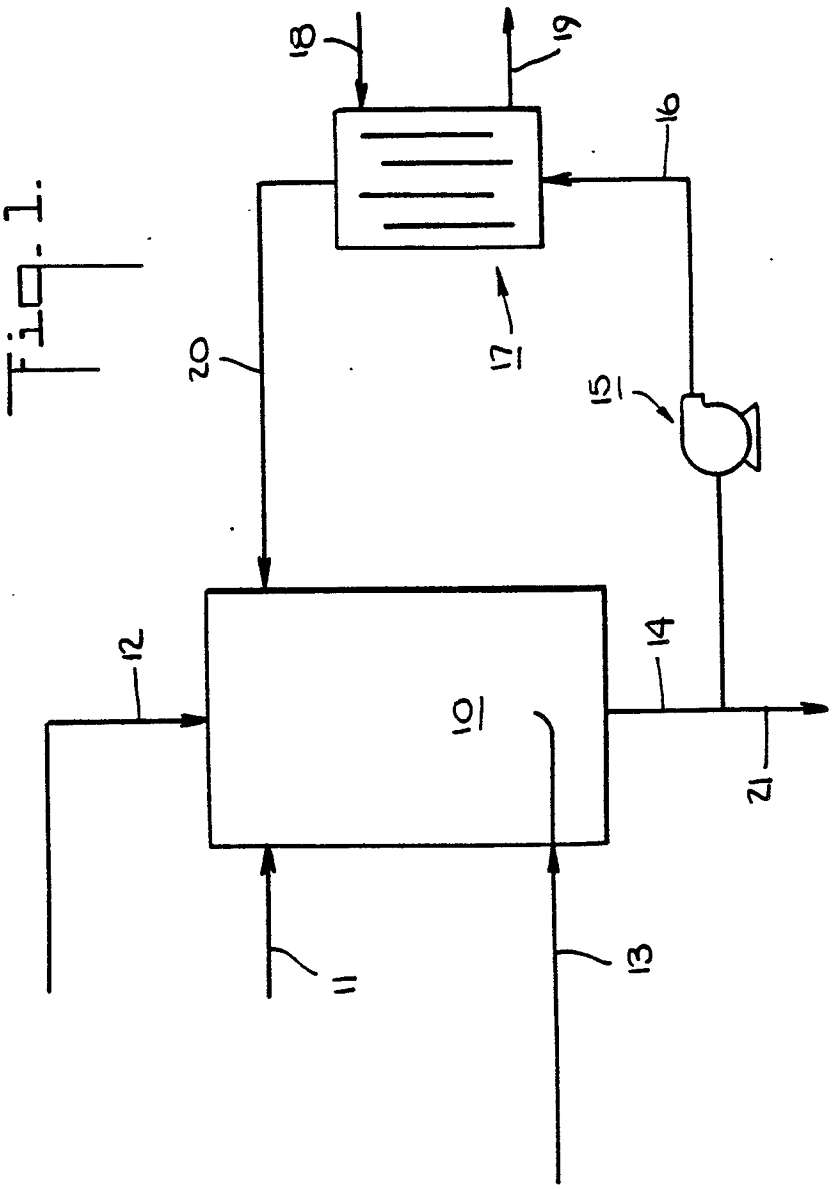

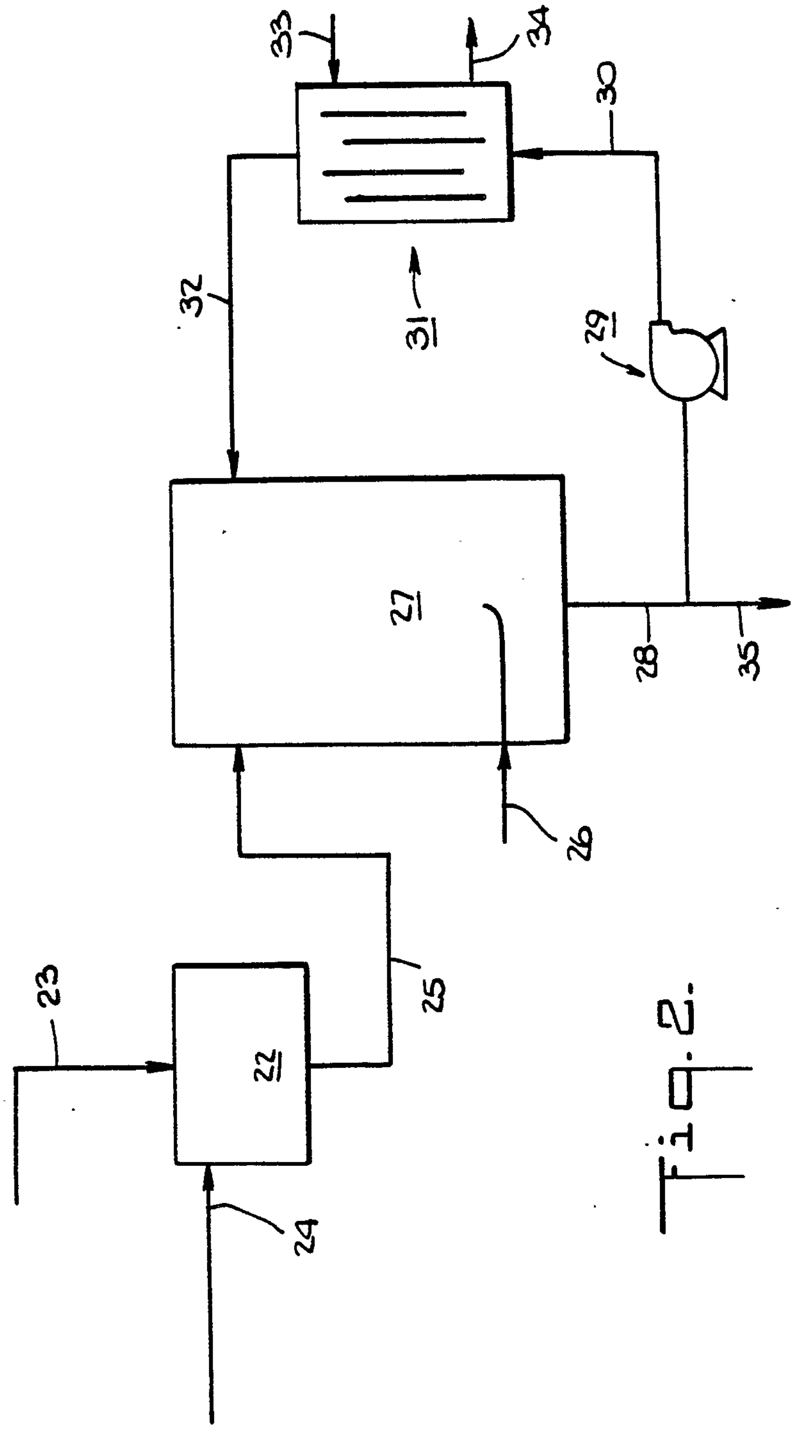


Fig. 2

Fig. 3.

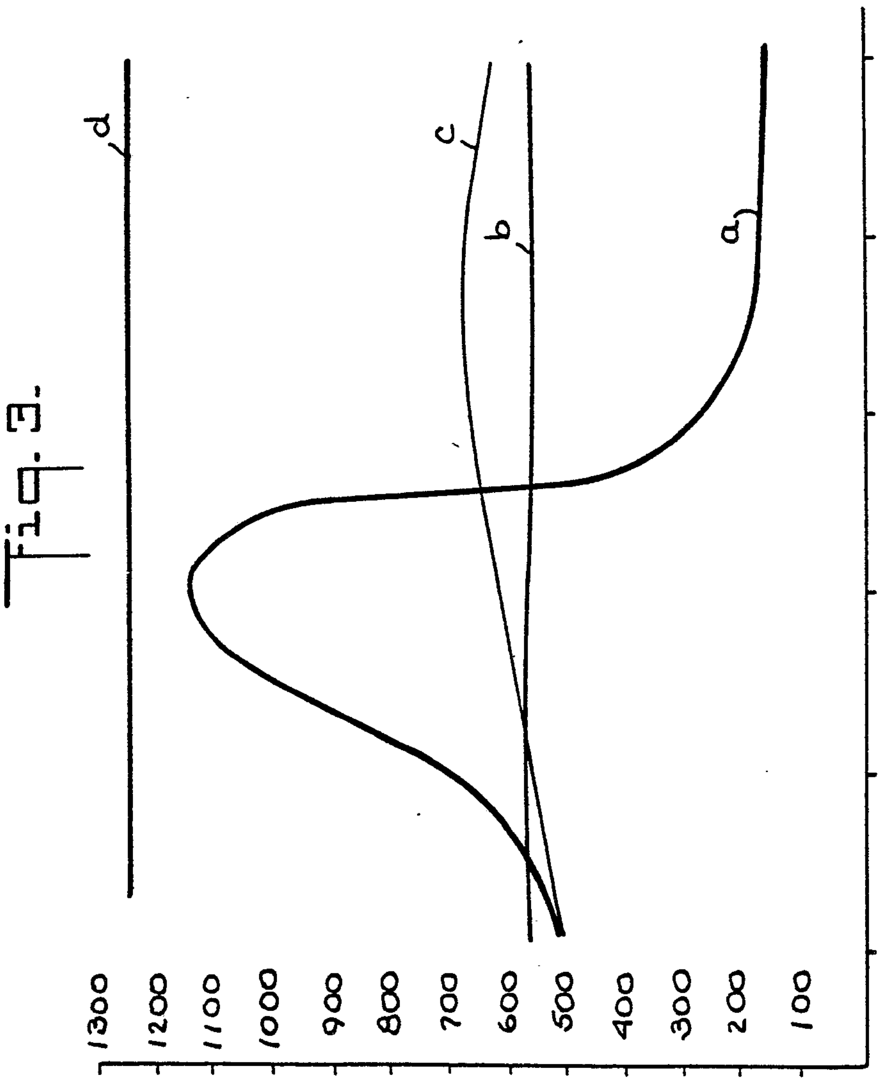
1300
1200
1100
1000
900
800
700
600
500
400
300
200
100
2
3
4
5
6
7
a
b
c
d